# EUROPEAN PATENT APPLICATION

(11) **EP 4 844 987 A1**
(43) Date of publication of application: **25.11.2026**
(21) Application number: 24918498.7
(22) Date of filing: 12.12.2024
(51) Int. Cl.: H02J 50/80, H02J 50/12, H04B 5/26, H04B 5/45, H04B 5/48, H04B 5/77, H04B 5/79

(54) **ELECTRIC POWER FEEDING DEVICE, ELECTRIC POWER RECEPTION DEVICE, METHOD PERFORMED BY SAID DEVICES, AND PROGRAM**

(30) Priority: 17.01.2024 JP 2024005434
(71) Applicant: Canon Kabushiki Kaisha, Tokyo 146-8501 (JP)
(72) Inventor: MIZUMORI, Ryuta, Tokyo 146-8501 (JP)
(74) Representative: Canon Europe Limited
(86) International application number: PCT/JP2024/044025
(87) International publication number: WO 2025/154441

(57) **Abstract**

A power transmission device performs negotiation with a power reception device, wirelessly transmits power to the power reception device on the basis of a result of the negotiation, and performs a process including detection of a near-field communication (NFC) tag (F709 to F724). The power transmission device transmits information on the NFC tag detection to the power reception device in at least the negotiation, wherein the NFC tag detection is performed during power transmission .

## Description

### TECHNICAL FIELD

The present disclosure relates to a technique of wireless power transfer.

### BACKGROUND ART

Recently, development for technology of a wireless power transfer system has been widely carried out. In general, the technology of a wireless power transfer system is based on a standard (a WPC standard) established as a wireless charging standard by the standardization organization the Wireless Power Consortium (WPC).

On the other hand, the NFC standard is known as a standard for short-range wireless communication. NFC is an abbreviation of Near Field Communication. In the NFC standard, transmission of a message for detecting a device to serve as a communication partner by transmitting carrier waves and modulating the carrier waves is referred to as polling. Polling is performed by a device having a function such as a reader/writer in the NFC standard. A device having a function of receiving polling from the reader/writer, applying load modulation to carrier waves transmitted from the read/writer, and responding to the polling is referred to as an NFC tag.

A power transmission device including a reader/writer based on the WPC standard and the NFC standard can detect an NFC tag in various steps of the WPC standard. The power transmission device can perform an NFC tag detecting process while periodically performing NFC polling in a negotiation step or an electric power transmitting step to a power reception device.

Patent Document 1 discloses a technique of causing a power transmission device having an NFC tag detecting function to transmit information indicating a result (a detection state) of an NFC tag detecting process to a power reception device in a negotiation step of the WPC standard. Specifically, the power transmission device transmits information indicating whether the NFC tag detecting process has been performed and information indicating whether an NFC tag has been detected as a detection state when the NFC tag detecting process has been performed to the power reception device.

In recent wireless power transfer systems, there has been need for an increase in output of electric power to be transmitted. Countermeasures for enhancing convenience for a user by enabling high-speed charging with an increase in output have been taken.

### Citation List

### Patent Document

[Patent Document 1] Japanese Patent No. 7336581

### SMMARY OF INVENTION

### Technical Problem

In wireless power transfer, frequency noise may be generated. This noise may interfere with a communication frequency used for NFC tag detection which can be performed during power transfer. As a result, the power transmission device may not be able to appropriately perform NFC tag detection.

The present disclosure provides a technique for appropriately performing an NFC tag detecting process.

### Solution to Problem

A power transmission device according to an aspect of the present disclosure comprises a negotiation means configured to perform negotiation with a power reception device, a power transmission means configured to wirelessly transmit power to the power reception device on the basis of a result of the negotiation, a processing means configured to perform a process including detection of a near-field communication (NFC) tag, and a communication means configured to transmit information on the NFC tag detection to the power reception device in at least the negotiation, wherein the NFC tag detection is performed during power transmission .

### Advantageous Effects of Invention

According to the present disclosure, it is possible to appropriately perform an NFC tag detecting process.

### BRIEF DESCRIPTION OF DRAWINGS

FIG. 1 is a diagram illustrating an example of a configuration of a wireless power transfer system according to a first embodiment.
FIG. 2 is a block diagram illustrating an example of a configuration of a power reception device.
FIG. 3 is a block diagram illustrating an example of a configuration of a power transmission device.
FIG. 4 is a sequence diagram illustrating an example of s basic process that is performed by the power transmission device and the power reception device according to the first embodiment.
FIG. 5 is a flowchart illustrating an example of a process flow that is performed by the power reception device according to the first embodiment.
FIG. 6 is a flowchart illustrating a process flow subsequent to FIG. 5.
FIG. 7 is a flowchart illustrating a process flow subsequent to FIG. 6.
FIG. 8 is a flowchart illustrating a process flow subsequent to FIG. 7.
FIG. 9 is a flowchart illustrating an example of a process flow that is performed by the power transmission device according to the first embodiment.
FIG. 10 is a flowchart illustrating a process flow subsequent to FIG. 9.
FIG. 11 is a flowchart illustrating a process flow subsequent to FIG. 10.
FIG. 12 is a sequence diagram illustrating an example of a process flow that is performed by the power transmission device and the power reception device.
FIG. 13 is a diagram illustrating an example of a state in which an NFC tag gets in between the power transmission device and the power reception device.
FIG. 14 is a flowchart illustrating an example of a process flow that is performed by a power reception device according to a second embodiment.
FIG. 15 is a flowchart illustrating an example of a process flow that is performed by a power transmission device according to the second embodiment.
FIG. 16 is a sequence diagram illustrating an example of a process flow that is performed by the power transmission device and the power reception device according to the second embodiment.
FIG. 17 is a flowchart illustrating an example of a process flow that is performed by a power reception device according to a third embodiment.
FIG. 18 is a flowchart illustrating an example of a process flow that is performed by a power transmission device according to the third embodiment.
FIG. 19 is a sequence diagram illustrating an example of a process flow that is performed by the power transmission device and the power reception device according to the third embodiment.
FIG. 20 is a diagram illustrating an example of information which is transmitted from the power transmission device to the power reception device in negotiation.
FIG. 21 is a diagram illustrating an example of a power transmission device state notification command.

### DESCRIPTION OF EMBODIMENTS

Hereinafter, embodiments of the present disclosure will be described with reference to the accompanying drawings. All of a plurality of features in the embodiments of the present disclosure cannot be said to be essential, and the plurality of features may be arbitrarily combined. Configurations described in the following embodiments are merely examples, and the present disclosure is not limited to the illustrated configurations. The same or similar constituents in the drawings will be referred to by the same reference signs, and repeated description will be omitted.

### [First embodiment]

### <Configuration of system>

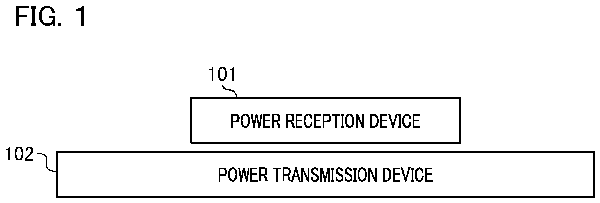

FIG. 1 is a diagram illustrating an example of a configuration of a wireless power transfer system according to an embodiment. An example of a configuration of a wireless power transfer system according to the present embodiment will be described. The wireless power transfer system includes, for example, a power reception device 101 and a power transmission device 102. In the following description, for the purpose of simplification, the power transmission device 102 may be referred to as TX, and the power reception device 101 may be referred to as RX.

An RX is, for example, an electronic device that receives electric power from a TX and charges a built-in battery with the electric power. The RX has a Wireless Power Consortium (WPC) function based on the WPC standard and copes with a device authentication protocol of that standard.

A TX is, for example, an electronic device that wirelessly transmits electric power to an RX placed over the TX. The TX wirelessly transmits electric power to the RX via a power transmission antenna.

In this system, it is assumed that wireless power transfer using an electromagnetic induction system for non-contact charging is performed on the basis of the WPC standard. That is, the RX and the TX perform wireless power transfer for non-contact charging between a power reception antenna of the RX and a power transmission antenna of the TX on the basis of the WPC standard. The wireless power transfer system (a non-contact power transfer system) is not limited to the system prescribed in the WPC standard, and another electromagnetic induction system, a magnetic resonance system, an electric-field resonance system, a microwave system, a system using a laser, or the like may be used. In the present embodiment, wireless power transfer is used for the non-contact charging, but the wireless power transfer may be performed as an application other than the non-contact charging.

In the WPC standard, a magnitude of electric power guaranteed when the RX receives electric power from the TX is defined by a value called guaranteed electric power, that is, Guaranteed Load Power (hereinafter referred to as "GP"). The GP indicates, for example, an electric power value, that is, a load power of the RX, which is guaranteed to be output to a load of the RX such as a charging circuit even when a positional relationship between the RX and the TX changes and power transmission efficiency between a power reception antenna and a power transmission antenna decreases. The GP may be a load power level agreed through negotiation between the TX and the RX. For example, when the GP is 15 watts, the TX transmits electric power by performing control such that 15 watts can be output to a load in the RX even when the positional relationship between the power reception antenna and the power transmission antenna changes and power transmission efficiency between the power reception antenna and the power transmission antenna decreases.

### <Configuration of power reception device>

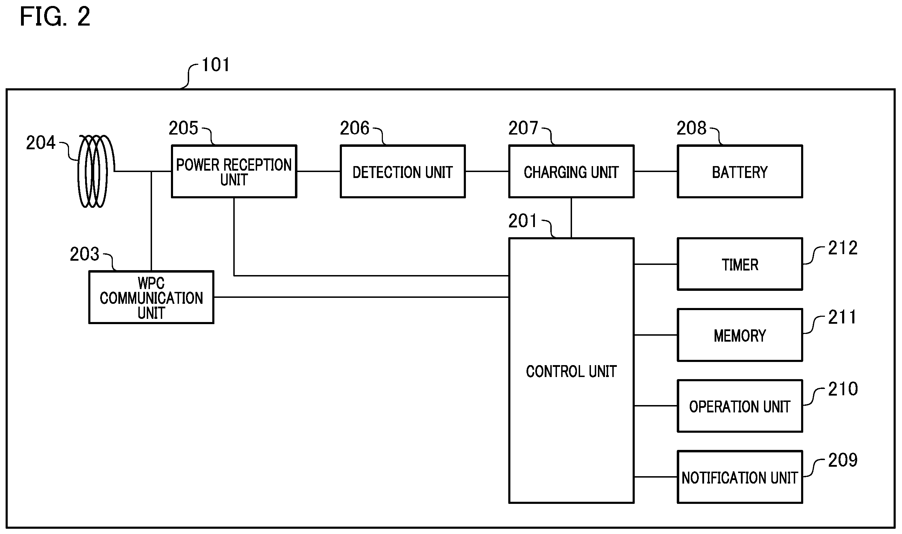

FIG. 2 is a diagram illustrating an example of a configuration of an RX according to the present embodiment. The RX includes a control unit 201, a WPC communication unit 203, a power reception antenna (power reception coil) 204, a power reception unit 205, a detection unit 206, a charging unit 207, a battery 208, a notification unit 209, an operation unit 210, a memory 211, and a timer 212.

The control unit 201 controls the RX as a whole. The control unit 201 includes, for example, one or more processors such as a central processing unit (CPU) or a microprocessor unit (MPU). The control unit 201 can measure time using the timer 212. The control unit 201 performs control, for example, by executing a control program stored in the memory 211.

The control unit 201 may be constituted by hardware dedicated for a specific process such as an application-specific integrated circuit (ASIC). Alternatively, the control unit 201 may be constituted by an array circuit such as a field-programmable gate array compiled to perform a predetermined process. The control unit 201 stores information to be stored in the memory 211 while performing various processes.

In the present embodiment, the control unit 201 is described as a single constituent, but the present disclosure is not limited thereto. For example, in the power reception device, a WPC control unit that controls processes associated with reception of electric power from the power transmission device may be separated from the control unit 201. Alternatively, a WPC control unit that controls processes associated with WPC communication may be separated from the control unit 201. When the control unit 201 is separated into a plurality of parts, the control parts are connected to each other via a communication interface and perform data communication therewith. The communication interface is not particularly limited as long as it is an interface capable of realizing data communication such as I2C or GPIO.

The WPC communication unit 203 performs wireless power transfer communication based on the WPC standard with the communication unit 306 of the TX. The WPC communication unit 203 performs communication with the TX by demodulating electromagnetic waves input from the power reception antenna 204, acquires information transmitted from the TX, and modulating the electromagnetic waves with a load to superimpose information to be transmitted to the TX on the electromagnetic waves. That is, the communication performed by the communication unit 306 is performed through superimposition on electromagnetic waves transmitted from the power transmission antenna 305 of the TX.

The power reception unit 205 receives AC electric power (an AC voltage and an alternating current) which is generated by electromagnetic induction based on electromagnetic waves radiated from the power transmission antenna of the TX via the power reception antenna 204. The power reception unit 205 converts the AC electric power to DC electric power or AC power of a predetermined frequency and outputs the conversion result to the detection unit 206. The power reception unit 205 is mainly an example of a power reception means for wirelessly receiving power from the power transmission device on the basis of negotiation.

The detection unit 206 detects that the RX is placed on the TX on the basis of the WPC standard. The detection unit 206 detects at least one of a voltage value and a current value of the power reception antenna 204, for example, when the power reception unit 205 receives a Digital Ping of the WPC standard via the power reception antenna 204. The detection unit 206 can determine that the RX is placed on the TX (a power receivable state), for example, when the voltage value is less than a predetermined voltage threshold value or when the current value is greater than a predetermined current threshold value.

The charging unit 207 charges the battery 208 with electric power supplied from the power reception unit 205. The charging unit 207 starts or stops charging of the battery 208 under the control of the control unit 201 and additionally adjusts electric power used for charging of the battery 208 on the basis of a state of charge of the battery 208. When electric power to be used by the charging unit 207 changes, electric power to be supplied from the power reception unit 205, that is, reception power in the RX, also changes according thereto. The charging unit 207 described herein is a load in the RX.

The battery 208 supplies electric power required for control of the constituents of the RX by the control unit 201 or power reception and communication to the whole RX. The battery 208 accumulates electric power received via the power reception antenna 204.

The notification unit 209 notifies a user of information using an arbitrary method such as a visual method, an auditory method, or a tactile method. For example, the notification unit 209 notifies a user of a state of charge of the RX or a state of power transfer of the wireless power transfer system including the RX and the TX as illustrated in FIG. 1. The notification unit 209 includes, for example, a liquid crystal display, an LED, a speaker, a vibration generation circuit, and/or another notification device.

The operation unit 210 has a reception function of receiving an operation on the RX from a user. The operation unit 210 includes, for example, a button, a keyboard, a voice input device such as a microphone, a motion detection device such as an acceleration sensor or a gyro sensor, and/or another input device. A device into which the notification unit 209 and the operation unit 210 are unified such as a touch panel may be used.

The memory 211 stores various types of information such as identification information or a device configuration information, a control program, or the like as described above. The memory 211 may store information acquired by the control unit 201 and other functional units.

The timer 212 counts time, for example, using a count-up timer for measuring an elapsed time from a started time or a count-down timer for counting down from a set time.

### <Configuration of power transmission device>

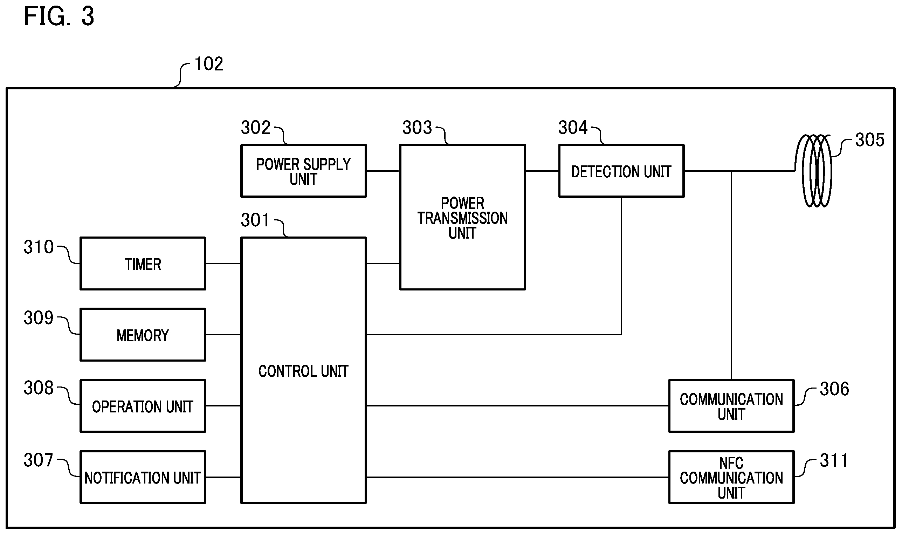

FIG. 3 is a diagram illustrating an example of a configuration of a TX according to the present embodiment. The TX includes a control unit 301, a power supply unit 302, a power transmission unit 303, a detection unit 304, and a power transmission antenna (power transmission coil) 305. The TX further includes a communication unit 306, a notification unit 307, an operation unit 308, a memory 309, a timer 310, and a near-field communication (NFC) communication unit 311.

The control unit 301 controls the TX as a whole, for example, by executing a control program stored in the memory 309. That is, the control unit 301 controls the functional units illustrated in FIG. 3. The control unit 301 performs control for power transmission in the TX. The control unit 301 performs control for an NFC function in the TX. The control unit 301 may perform control for executing an application other than wireless power transfer. The control unit 301 includes, for example, one or more processors such as a CPU or an MPU. The control unit 301 may be constituted by a single processor, or a main control unit for controlling the whole and a sub control unit for controlling a power transmission process or NFC communication may be realized by different processors.

The control unit 301 may include hardware dedicated for a specific process such as an application-specific integrated circuit (ASIC) or an array circuit such as an FPGA compiled to perform a predetermined process. The control unit 301 stores information to be stored in the memory 309 while performing various processes. The control unit 301 can measure time using the timer 310.

The power supply unit 302 supplies electric power required for control of the TX by the control unit 301 or power transmission and communication to the whole TX. The power supply unit 302 is, for example, a commercial power supply or a battery. Electric power supplied from the commercial power supply is accumulated in the battery.

The power transmission unit 303 generates electromagnetic waves for transmitting electric power to the RX by converting DC or AC electric power input from the power supply unit 302 to AC electric power of a frequency band used for wireless power transfer and inputting the AC frequency electric power to the power transmission antenna 305. The frequency of the AC electric power generated by the power transmission unit 303 is, for example, about several hundreds of kHz (for example, 110 kHz to 205 kHz). The power transmission unit 303 inputs AC frequency electric power to the power transmission antenna 305 such that electromagnetic waves for transmitting electric power to the RX are output from the power transmission antenna 305 on the basis of an instruction from the control unit 301.

The power transmission unit 303 controls an intensity of electromagnetic waves to be output by adjusting a voltage (a transmission voltage) or a current (a transmission current) input to the power transmission antenna 305 or both thereof. The intensity of electromagnetic waves is increased when the transmission voltage or the transmission current is increased, and the intensity of electromagnetic waves is decreased when the transmission voltage or the transmission current is decreased. The power transmission unit 303 performs output control of AC frequency electric power such that power transmission from the power transmission antenna 305 is started or stopped on the basis of an instruction from the control unit 301. The power transmission unit 303 notifies the control unit 301 of a current transmission power such that the control unit 301 knows the transmission power at an arbitrary timing. Measurement of transmission power and notification of the control unit 301 may be performed by a unit other than the power transmission unit 303. Mainly, the power transmission unit 303 is an example of a power transmission means for wirelessly transmitting power to a power reception device on the basis of negotiation.

The detection unit 304 detects whether an object is placed on the TX on the basis of the WPC standard. Specifically, the detection unit 304 detects whether an object is placed on an Interface Surface of the TX. The detection unit 304 detects at least one of a voltage value and a current value of the power transmission antenna 305, for example, when the power transmission unit 303 has transmitted an Analog Ping of the WPC standard via the power transmission antenna 305.

The detection unit 304 may detect a change in impedance. When the voltage value is less than a predetermined voltage value or when the current value is greater than a predetermined current value, the detection unit 304 can determine that an object is placed on the TX. Whether the object is a power reception device or another object is determined depending on whether there is a predetermined response to a Digital Ping which is subsequently transmitted from the communication unit 306. That is, it is determined that the object is a power reception device when the TX has received the predetermined response, and, otherwise, it is determined that the object is an object other than a power reception device.

The communication unit 306 performs control communication based on the WPC standard with the RX. The communication unit 306 performs communication by modulating electromagnetic waves output from the power transmission antenna 305 and transmitting information to the RX. The communication unit 306 demodulates electromagnetic waves output from the power transmission antenna 305 and modulated in the RX and acquires information transmitted from the RX. That is, communication performed by the communication unit 306 is performed through superimposition on electromagnetic waves transmitted from the power transmission antenna 305.

The notification unit 307 notifies a user of information using an arbitrary method such as a visual method, an auditory method, or a tactile method. For example, the notification unit 307 notifies a user of information indicating a state of charge of the TX or a state of power transfer of the wireless power transfer system including the RX and the TX as illustrated in FIG. 1. The notification unit 307 includes, for example, a liquid crystal display, an LED, a speaker, a vibration generation circuit, and/or another notification device.

The operation unit 308 has a reception function of receiving an operation on the TX from a user. The operation unit 308 includes, for example, a button, a keyboard, a voice input device such as a microphone, a motion detection device such as an acceleration sensor or a gyro sensor, and/or another input device. A device into which the notification unit 307 and the operation unit 308 are unified such as a touch panel may be used.

The memory 309 stores various types of information such as identification information or capability information, a control program, or the like. The capability information includes information indicating whether a high-precision foreign matter detection processing capability is provided. The memory 309 may store information acquired by the control unit 301 and other functional units.

The timer 310 counts time, for example, using a count-up timer for measuring an elapsed time from a started time or a count-down timer for counting down from a set time.

The NFC communication unit 311 is a hardware module for realizing an NFC function. Specifically, the NFC communication unit 311 realizes a card emulation mode for replacing the role of a non-contact IC card, a reader/writer mode for reading an NFC tag 801, and a P2P mode for directly exchanging a message between NFCs. For example, electronic money settlement is enabled using the card emulation mode.

The communication unit 306 and the NFC communication unit 311 may be realized by a single piece of hardware or may be realized by different pieces of hardware.

### <Basic sequence of TX and RX>

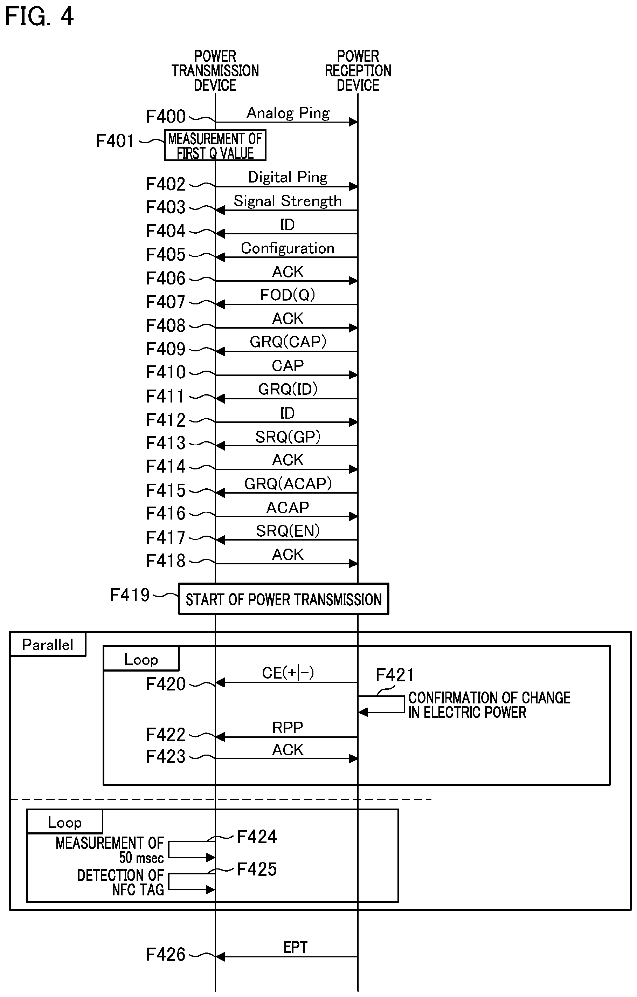

FIG. 4 is a sequence diagram illustrating an example of a control flow that is performed by a TX and an RX based on the WPC standard.

The TX transmits an Analog Ping (hereinafter referred to as A-Ping) to detect an object near the power transmission antenna 305 (F400). A-Ping is pulse-like electric power and is electric power for detecting an object. A-Ping is low electric power enough not to start the control unit 301 of the RX even when the RX receives A-Ping. The TX detects an object on the basis of a shift in resonance frequency of a voltage value in the power transmission antenna 305 due to an object near the power transmission antenna 305 or a change in voltage value and/or current value in the power transmission antenna 305.

When an object is detected using A-Ping, the TX measures the Q value of the power transmission antenna 305, details of which are not described (F401). When measurement of the Q value ends, the TX starts transmission of a Digital Ping (hereinafter referred to as D-Ping) (F402). D-Ping is electric power for starting the control unit 301 of the RX and is higher electric power than A-Ping. D-Ping is continuously transmitted thereafter. That is, the TX continuously transmits electric power equal to or higher than D-Ping until End Power Transfer (EPT) data for requesting to stop power transmission is received from the RX (F416) after transmission of D-Ping has been started (F402).

When the RX receives D-Ping and is started, the RX transmits signal strength which is data including a voltage value of the received D-Ping to the TX (F403). Subsequently, the RX transmits data including an ID including version information of the WPC standard on which the RX is based or device identification information (F404). In addition, the RX transmits Configuration data including information including a maximum value of electric power supplied from the power reception unit 205 to a load (or the charging unit 207) or the like to the TX (F405). The TX receives the ID and the Configuration data and returns ACK when it is determined that the RX corresponds to an extension protocol (which includes Negotiation which will be described later) subsequent to the WPC standard v1.2 (F406).

When the ACK is received, the RX transitions to a Negotiation phase in which negotiation of electric power to be transmitted and received or the like is performed. In the Negotiation phase, mainly the control unit 201 of the RX and a program for realizing the negotiation are an example of a negotiation means. Similarly, mainly the control unit 301 of the TX and a program for realizing the negotiation are an example of a negotiation means. First, the RX transmits foreign object detection (FOD) Status data to the TX (F407). In the present embodiment, the FOD Status data is referred to as FOD(Q). The TX detects a foreign object on the basis of a Q value stored in the received FOD(Q) and a Q value measured through measurement of a Q value and transmits an ACK indicating that it is determined that there is a high likelihood that there is no foreign object to the RX (F408).

When the ACK is received, the RX transmits a General Request(capabilities) which is data for inquiring about the capability of the TX and which is one General Request defined in the WPC standard (F409). In the following description, the General Request(capabilities) is referred to as GRQ(CAP). When the GRQ(CAP) is received, the TX transmits capability data (referred to as CAP) including capability information corresponding to the TX (F410).

Then, the RX transmits a General Request(ID) (referred to as GRQ(ID)) which is data for requesting the TX to transmit identification information and which is one General Request defined in the WPC standard (F411). The identification information includes a corresponding standard version. The TX transmits the identification information in response to the request from the RX (F412).

Subsequently, negotiation of GP is performed between the TX and the RX. That is, GP is a value which can be determined by agreement through negotiation with the TX. GP which is requested through the negotiation by the RX is electric power corresponding to a power reception capability of the RX and can be set to, for example, a maximum value of load power (electric power consumed by the charging unit 207) of the RX. The negotiation is realized by transmitting data including the GP value requested by the RX out of Specific Request data defined in the WPC standard to the TX (F413).

### In the present embodiment, the data is referred to as Specific Request(GP) (SRQ(GP)).

The TX responds to the SRQ(GP) in consideration of a power transmission capability of the TX. The TX transmits an ACK indicating that the request is accepted (F414) when it is determined that the GP can be accepted and transmits a NAK indicating that the request is not accepted when it is determined that the request is not accepted. When the NAK is transmitted, the RX transmits SRQ(GP) in which the requested GP value has been changed again and checks a response from the TX. The processes of F413 and F414 are repeated until the TX returns an ACK indicating that the GP is accepted. In the present embodiment, it is assumed that the RX requests 100 watts as GP in the SRQ(GP).

Subsequently, the RX transmits GRQ(ACAP) which is data for inquiring about an extension capability of the TX and which is a General Request defined in the WPC standard (F415). ACAP is an abbreviation of additional capabilities. The ACAP includes additional information on a capability of the TX. Details of the ACAP will be described later. When the GRQ(ACAP) is received, the TX transmits an ACAP including additional information corresponding to the TX (F416).

When negotiation of a plurality of parameters including GP ends, the RX transmits SRQ(EN) for requesting End Negotiation out of the Specific Requests to the TX (F417). The TX transmits an ACK in response to the SRQ(EN) (F418) and ends the Negotiation. Thereafter, the TX transitions to a Power Transfer phase in which transmission and reception of electric power of the GP determined in the Power Transfer phase are performed (F419).

After having received the ACK, the RX connects the power reception unit 205 and the load (the charging unit 207) and supplies the received electric power to the load. In a state in which electric power is supplied to the load, the RX transmits a control error (hereinafter referred to as CE) packet to the TX according to the load. Hereinafter, a CE packet is referred to as CEP. The CEP includes a sign and a numerical value. When a sign of a numerical value included in the CEP is plus, it means that a reception voltage is increased by the numerical value. When the sign of the numerical value included in the CEP is minus, it means that the reception voltage is decreased by the numerical value. When the numerical value is zero (CE(0)), it means that it is required to maintain the reception voltage. Control of the reception voltage is equivalent to control of reception power. Here, the RX transmits, for example, CE(+) indicating that the reception voltage is increased to the TX (F420).

When the CE(+) is received, the TX changes a set value of a power transmission circuit in the power transmission unit 303 and increases a transmission voltage (transmission power). When it is ascertained that the reception power is increased in response to the CE(+) (F421), the RX supplies the received power to the load (for example, the charging unit 207) and transmits a received power packet (RPP) to the TX (F422). Here, a reception power value in a state in which the RX has supplied an output of the power reception unit 205 to the load is included in the RPP. The TX having received and ascertained the RPP transmits an ACK to the RX (F423). The processes of F420 to F423 are repeatedly performed in the Power Transfer phase.

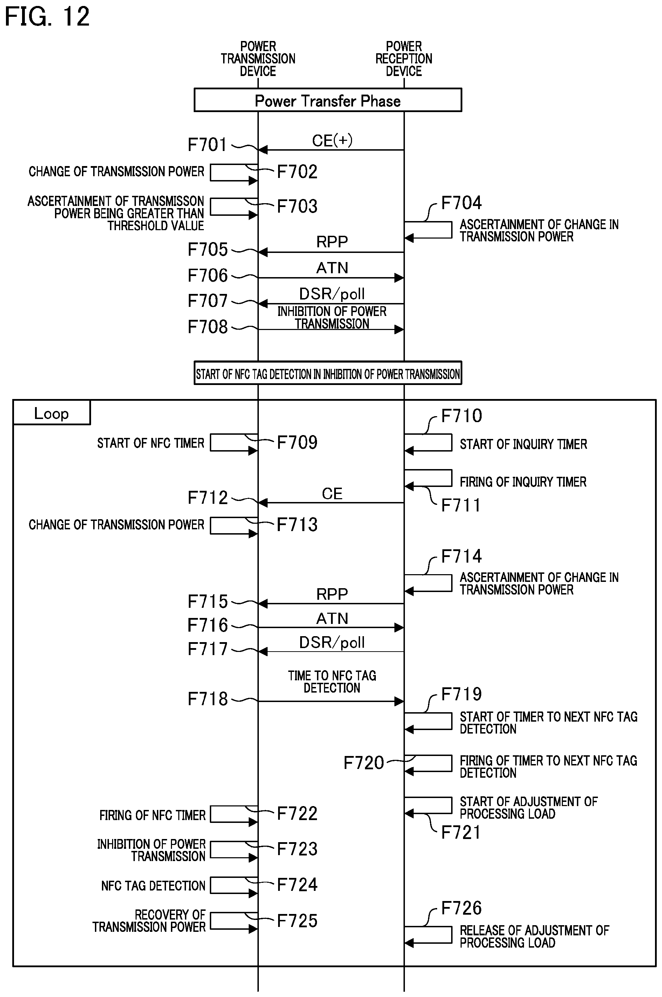

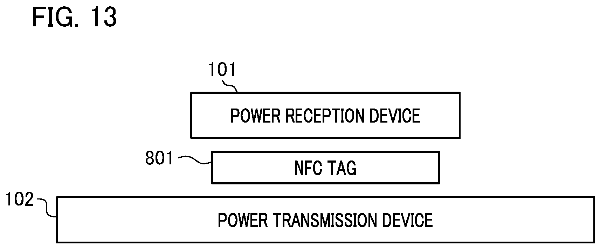

For example, the TX performs processes (for example, F709 to F725 of FIG. 12 which will be described later) including NFC tag detection of F424 and F425 in parallel with the processes of F420 to F423. Specifically, the processes including NFC tag detection mean processes associated with adjustment (for example, inhibition) of transmission power by the TX including the NFC tag detection. As illustrated in FIG. 13, for example, it is assumed that an NFC tag 801 gets in between the TX and the RX, and F424 and F425 are processes of detecting the tag.

Specifically, the TX measures a predetermined time by periodically performing NFC tag detection (F424). The predetermined time is an example of a time which is set by an NFC timer which will be described later and which is an execution wait time. The predetermined time is, for example, 50 ms, but is not limited thereto. When the predetermined time has elapsed, the TX performs an NFC tag detecting process (F425). The TX can detect appearance of an NFC tag in the Power Transfer phase by repeating the NFC tag detection every predetermined time.

In the present disclosure, "after ~ time has elapsed" literally means immediately after the time has elapsed and additionally means "at any time after the time has elapsed." For example, a "process after ~ time has elapsed" is not limited to a process immediately after the time has elapsed and may include another process between immediately after the time has elapsed and a target process. The meaning of "after ~ time has elapsed" is true of, for example, "after" such as "after ~ has exceeded a threshold value."

When an NFC tag has been detected, the TX controls the transmission power to a predetermined value in consideration of a likelihood that the NFC tag will be damaged by electromagnetic waves at the time of power transmission. The predetermined value is a value that is calculated depending on a situation and can have a plurality of values depending on the situation. The predetermined value may be 0 W, that is, power transmission may be stopped. "Depending on a situation" means, for example, that the TX controls transmission power to equal to or lower than permitted power when information of power permitted by the NFC tag is included in the NFC tag information. Alternatively, "depending on a situation" means, for example, that the TX sets the transmission power to, for example, a minimum value or stops power transmission when information indicating that power transmission is permitted is not included in the NFC tag information.

Here, it should be noticed that a transmission power adjusting process including the NFC tag detection and the process of controlling transmission power to a predetermined value when an NFC tag is detected are different. Details thereof will be described later.

The control unit 301, the NFC communication unit 311, a program for realizing NFC tag detection, a program for communicating with the RX during power transmission, and the like are an example of a processing means for performing a process including NFC tag detection. The control unit 301, the communication unit 306, a program for communicating with the RX during negotiation or power transmission, and the like are an example of a communication means in the power transmission device. Similarly, the control unit 201, the WPC communication unit 203, a program for communicating with the TX, and the like are an example of a communication means in the power reception device.

When charging of the battery 208 ends, the RX transmits End Power Transfer (EPT) data for requesting the TX to stop power transmission (F426).

A control flow between the TX and the RX based on the WPC standard has been described hitherto, which is a basic process sequence between the TX and the RX in wireless power transfer.

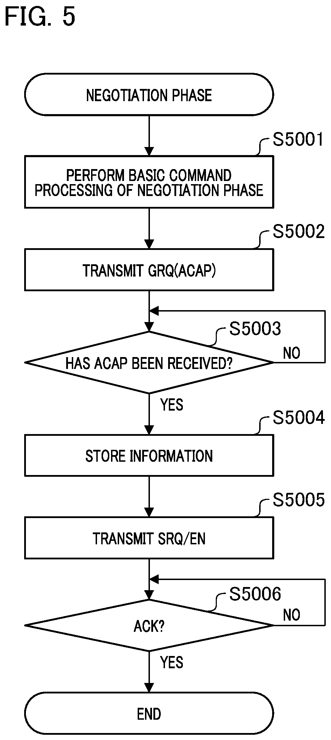

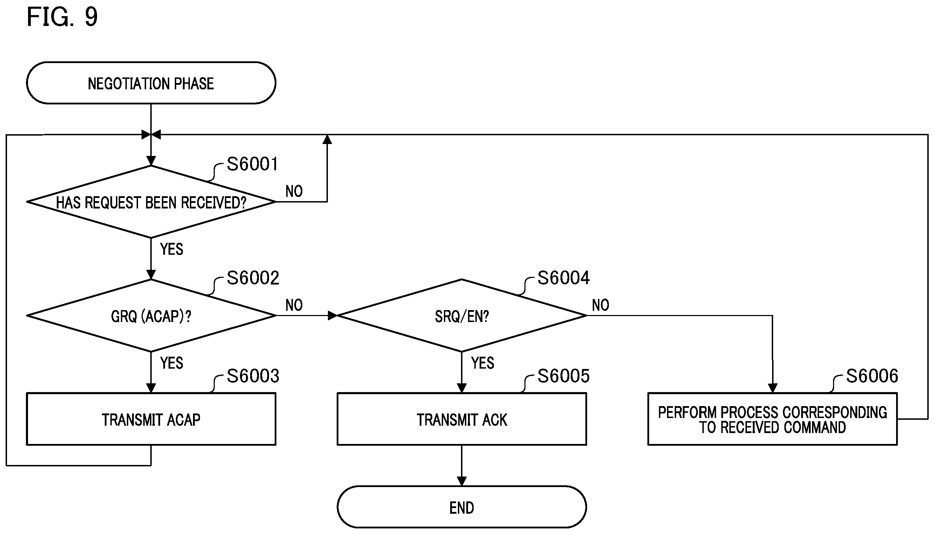

Processes when an NFC tag 801 gets in between a TX and an RX as illustrated in FIG. 13 mainly in the Power Transfer phase of a high output will be described below. In this case, according to the present embodiment, it is possible to perform appropriate transmission of electric power and to reliably perform NFC tag detection. This will be described with reference to FIGS. 5 to 12. FIGS. 5 to 8 are flowcharts illustrating a process flow that is performed by an RX. FIGS. 9 to 11 are flowcharts illustrating a process flow that is performed by a TX. FIG. 12 is a sequence diagram illustrating the process flows that are performed by the TX and the RX.

In the present embodiment, the TX and the RX exchange various types of information in a Negotiation phase before the Power Transfer phase in order to reduce (lower) transmission power at the time of NFC tag detection in the Power Transfer phase of a high output. In the Power Transfer phase, the TX adjusts (for example, reduces) transmission power in periodic NFC tag detection using that information, and the corresponding RX copes with the adjustment of transmission power in the TX. Compatibility between power transmission and NFX tag detection at a high output is achieved by cooperation between the TX and the RX.

### <Process flow in power reception device>

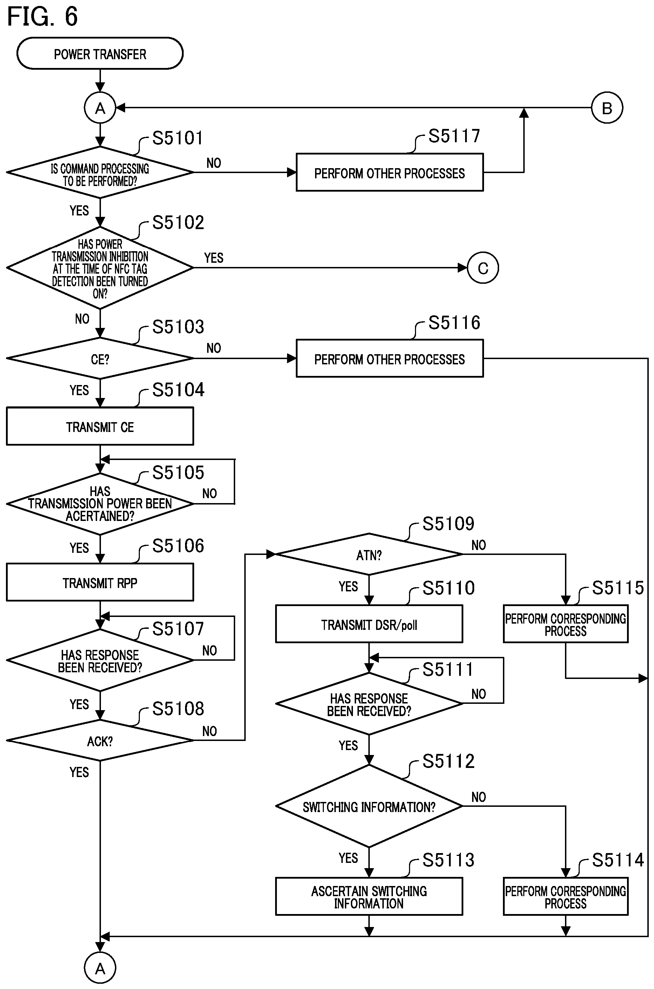

FIGS. 5 to 8 are flowcharts illustrating an example of a process flow that is performed by an RX. FIG. 5 is a flowchart illustrating a process flow in the Negotiation phase, and FIGS. 6, 7, and 8 are flowcharts illustrating a process flow in the Power Transfer phase. This process flow can be realized, for example, by causing the control unit 201 of the RX to execute a program read from the memory 211. At least a part of the following sequence may be realized by hardware. The hardware in this case can be realized, for example, by automatically generating a dedicated circuit using a gate array circuit such as an FPGA from a program for realizing process steps using a predetermined compiler. This process flow can be performed by turning on a power supply of the RX, by starting the RX with supply of electric power from the battery 208 or the TX, or by allowing a user of the RX to input an instruction to start a non-contact charging application. This process flow may be started with another trigger.

In S5001, the RX performs basic command processing in the Negotiation phase. The processes of F407 to F414 in the sequence diagram are assumed. In S5002, the RX transmits a GRQ(ACAP) message. Transmission of various messages from the RX to the TX is realized by causing the control unit 201 to transmit a message to the WPC communication unit 203.

In S5003, the RX waits for an ACAP message from the TX. Reception in the RX of a message transmitted from the TX is realized by causing the control unit 201 to poll the WPC communication unit 203. The RX checks the message and stores the received information in S5004.

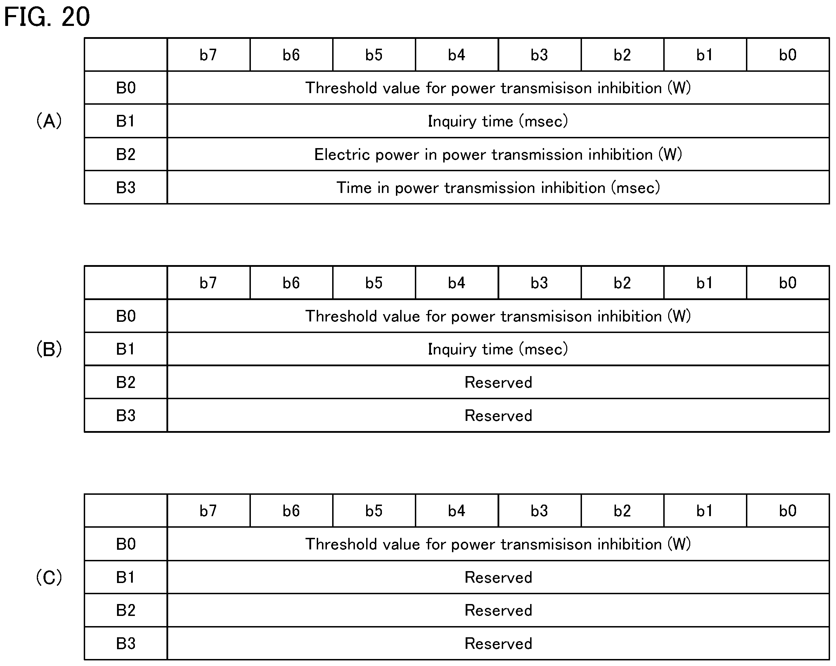

In the present embodiment, details and formats illustrated in FIG. 20(A) can be assumed as a message transmitted from the TX. The RX can receive information on B0 "threshold value for power transmission inhibition (for example, 80 W)"/B1 "inquiry time"/B2 "electric power in power transmission inhibition"/B3 "power transmission inhibition time" from the TX.

The "threshold value for power transmission inhibition" is a threshold value of transmission power serving as a trigger for starting power transmission inhibition.

The "inquiry time" is a time until an inquiry is transmitted to the TX in the processes (F709 to F724 in FIG. 12 which will be described later) including NFC tag detection in the Power Transfer phase. Here, an inquiry means a request from the RX for the TX to transmit predetermined information to the RX. The predetermined information includes, for example, a time until the TX actually performs NFC tag detection. The predetermined information also includes B2 "electric power in power transmission inhibition" and B3 "power transmission inhibition time."

The timing at which the inquiry time starts (the transmission request is transmitted) is a timing after the RX has received "power transmission inhibition ON/OFF switching information" (from OFF to ON herein) from the TX and has ascertained the information as will be described later. The RX needs to ascertain the timing at which the NFC tag detection is performed to prepare for power transmission inhibition in the NFC tag detection by the TX. The preparation for power transmission inhibition is mainly adjustment of a processing load on the RX side or the like as will be described later. In the present embodiment, it is assumed that the RX performs a CE(CEP) or RPP transmitting process. Accordingly, the RX transmits an inquiry with transmission of the CEP or RPP performed after start of a timer based on an inquiry time and firing of the timer as a trigger as will be described later. The inquiry time is, for example, 30 ms and is not limited thereto. The "inquiry time" is an example of an inquiry wait time.

The "electric power in power transmission inhibition" is transmission power in a period ("power transmission inhibition time") in which the transmission power is inhibited. The electric power in power transmission inhibition can have a value equal to or less than a "threshold value for transmission power" and is, for example, 40 W. Stop of power transmission (that is, 0 W) is also included in "power transmission inhibition" as will be described in [Other embodiments]. Information of the "electric power in power transmission inhibition" is an example of adjustment power information.

The "power transmission inhibition time" is a time over which a state in which power transmission is inhibited is maintained. The information of the "power transmission inhibition time" is an example of duration time information.

In S5005, the RX transmits SRQ/EN to end the Negotiation phase. In S5006, the RX waits for an ACK, ends the Negotiation phase after having ascertained the ACK, and transitions to the Power Transfer phase subsequent to S5101.

Referring to FIG. 6, in S5101, the RX ascertains whether command processing is to be performed, causes the process flow to proceed to S5102 when command processing is to be performed, performs other processes in S5117 when command processing is not to be performed, and causes the process flow to return to S5101. A command mainly means a request transmitted from the RX side to the TX side. For example, when the determination result of S5101 is YES, the command is a CEP or an

### RPP.

In S5102, the RX ascertains whether the current power transmission inhibition at the time of NFC tag detection is ON or OFF. The process from S5103 to S5101 via YES in S5108 is a process in a state in which power transmission inhibition is OFF and is a process in a state in which transmission power does not exceed the "threshold value for power transmission inhibition" (for example, 80 W).

In S5103, the RX determines whether a CE(CEP) is to be transmitted. When a CE is to be transmitted, the RX transmits the CE to the TX in S5104. When a CE is not to be transmitted, the RX performs other command processing in S5116. The CE, that is, a request for control of transmission power to the TX, is performed regardless of whether power transmission inhibition is ON or OFF (S5104 and S5121 which will be described later).

In S5105, the RX ascertains transmission power from the TX in response to the transmitted CE (F421). After ascertaining (a change of) transmission power, the RX transmits a received power packet (RPP) to the TX in S5106 (F421). The RX waits for a response from the TX with respect to the RPP in S5107 and ascertains a type of the response in S5108 when the response is received. When the response is an ACK in S5108 (F423), the RX causes the process flow to return to S5101. When the response is an attention (ATN) (YES in S5109), the RX transmits a data stream response (DSR)/poll to the TX in S5110. The ATN is a response indicating that the TX is to send additional information to the RX.

The RX waits for a response to the DSR/poll in S5111 and ascertains details of the response in S5112. When details of the response are "power transmission inhibition ON/OFF switching information" at the time of NFC tag detection, the RX ascertains details of the switching information in S5113 and causes the process flow to return to S5101.

The power transmission inhibition ON/OFF switching information is information indicating whether to start or release power transmission inhibition in NFC tag detection during power transmission in the Power Transfer phase. Specifically, the power transmission inhibition ON/OFF switching information is information indicating "switching from OFF to ON" for starting power transmission inhibition and information indicating "switching from ON to OFF" for releasing that. When the result of S5112 is YES, information indicating "switching from OFF to ON" is received. Here, since the current process is a process via NO in S5102, YES in S5112 means "switching from OFF to ON" and means that the transmission power exceeds the threshold value (for example, 80 W).

In the following description, "switching from OFF to ON" for power transmission inhibition process is referred to as "OFF→ON," and "switching from ON to OFF" is referred to as "ON→OFF." In the following description, the "power transmission inhibition ON/OFF switching information" may be abbreviated to "switching information."

On the other hand, when the details are not "switching information" (NO in S5112), the RX performs a process corresponding to details of the response received in S5112 in S5114 and causes the process flow to return to S5101. When the response in S5107 is neither ACK nor ATN (NO in S5108 and S5109), the RX performs a process corresponding to details of the response received in S5112 in S5115 and causes the process flow to return to S5101.

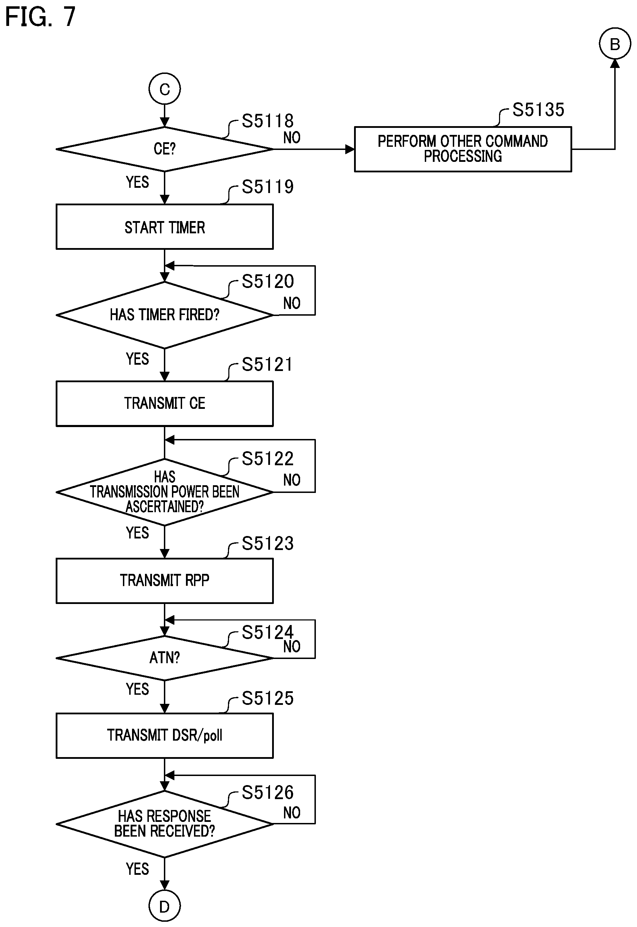

A process flow when power transmission inhibition at the time of NFC tag detection is ON in S5102 will be described below with reference to FIG. 7. In S5118, the RX determines whether to transmit a CE (CEP). When a CE is to be transmitted, the RX start a timer in S5119. When a CE is not to be transmitted, the RX performs other command processing in S5135 and causes the process flow to return to S5101.

In S5119, the RX sets the timer to an "inquiry time" acquired from the TX in S5002 to S5004. In the following description, the timer is referred to as the "inquiry timer" for the purpose of convenience of explanation. The start of the timer is realized by operating the timer 212 from the control unit 201. In S5120, the RX ascertains whether the inquiry timer has fired, that is, when the set time has elapsed (or whether the current time has reached the set time). Ascertainment of firing of the inquiry time is realized by causing the control unit 201 to poll the timer 212. When firing of the inquiry timer is ascertained, the RX transmits a CE in S5121 and ascertains transmission power in S5122. This process is the same as the processes of S5104 and S5105.

Since the transmission power is greater than the threshold value (for example, 80 W) in S5121, it is preferable to transmit a CE(-) for decreasing the transmission power in S5121. However, the present disclosure is not limited to transmission of the CE(-), but a CE(+) or a CE(0) may be transmitted. Even when the CE(+) or the CE(0) is transmitted, the TX may ignore the request and perform the power transmission inhibition (S6120 which will be described later).

The RX transmits the RPP in S5123 and waits for an ATN in S5124. In a process when the power transmission inhibition at the time of NFC tag detection is ON (a process subsequent to S5118), transmission of an ANT from the TX in response to the RPP is assumed (S6111 which will be described later). After an ATN has been received, the RX transmits the DSR/poll to the TX in S5125.

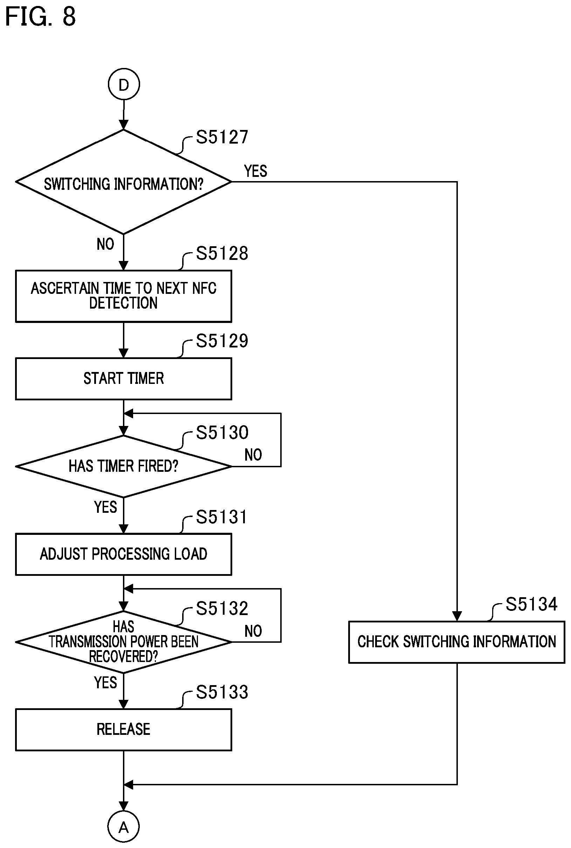

The RX waits for a response to the DSR/poll in S5126 and ascertains details of the response in S5127 as illustrated in FIG. 8. When the transmission power is exceeding the threshold value as described above (NO in S6110 which will be described later) and the details of the response are not switching information (NO in S5127), the details of the received response means that the time until the NFC tag detection has been acquired by the RX. That is, in S6114 which will be described later, the TX transmits time information until the NFC tag detection, and the RX receives the time information. In this case, the RX ascertains the response information in S5128 and starts the timer in S5129. In S5129, a time corresponding to the time until the NFC tag detection acquired in S5128 is set.

In S5130, the RX ascertains whether the timer has fired. After the timer has fired, the RX adjusts a processing load in the RX in S5131. Adjustment of the processing load means that the processing load of the RX is controlled such that the RX can operate in the range of "electric power in power transmission inhibition" acquired from the TX in S5002 to S5004. Specifically, the following examples are conceivable as the adjustment of the processing load. Software with a high processing load out of software which is being performed by the control unit 201 is stopped during the "power transmission inhibition time" acquired from the TX in S5004. Alternatively, a clock of the control unit 201 may be set to be low during the "power transmission inhibition time" of the processing load. Mainly, the control unit 201 and the program for adjusting the processing load are an example of an adjustment means for adjusting a processing load of a power reception device.

Thereafter, the RX waits for recovery of transmission power in S5132. This is realized by causing the control unit 201 to poll the power reception unit 205. When the transmission power is recovered, the RX releases control of the processing load performed in S5131 in S5133 and causes the process flow to return to S5101. When details of the response in S5126 are "power transmission inhibition ON/OFF switching information" (YES in S5127), the RX ascertains details of the switching information in S5134 and causes the process flow to return to S5101. Here, the switching information is information indicating that power transmission inhibition control in the NFC tag detection during power transmission is "ON→OFF." That is, this means that the transmission power is less than the threshold value (for example, 80 W).

As described above, the RX can cope with power transmission inhibition in NFC tag detection which is switched with a change in transmission power while communicating with the TX.

### <Process flow in power transmission device>

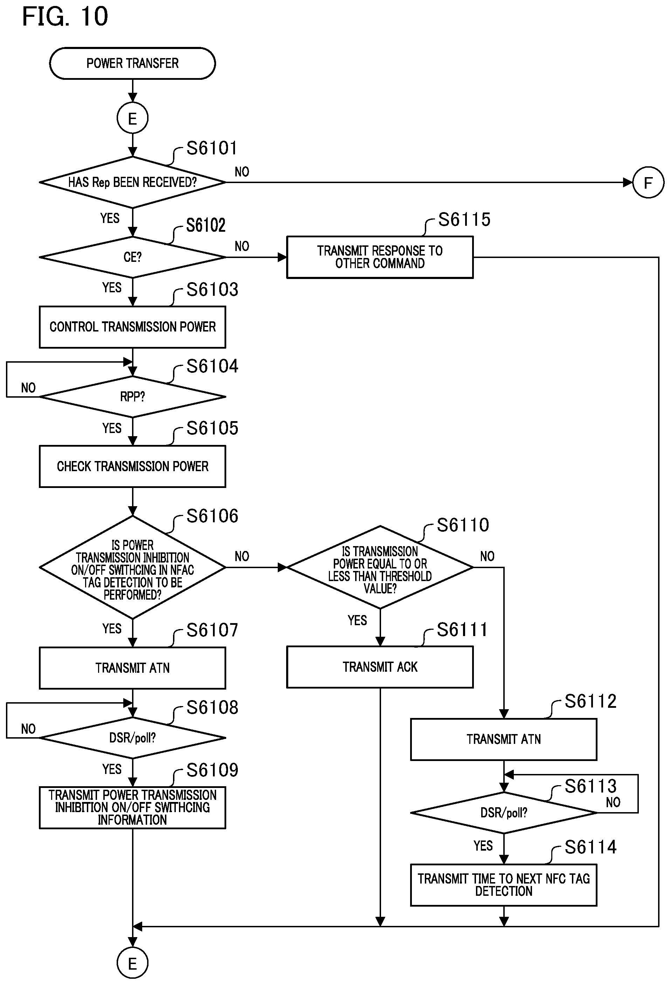

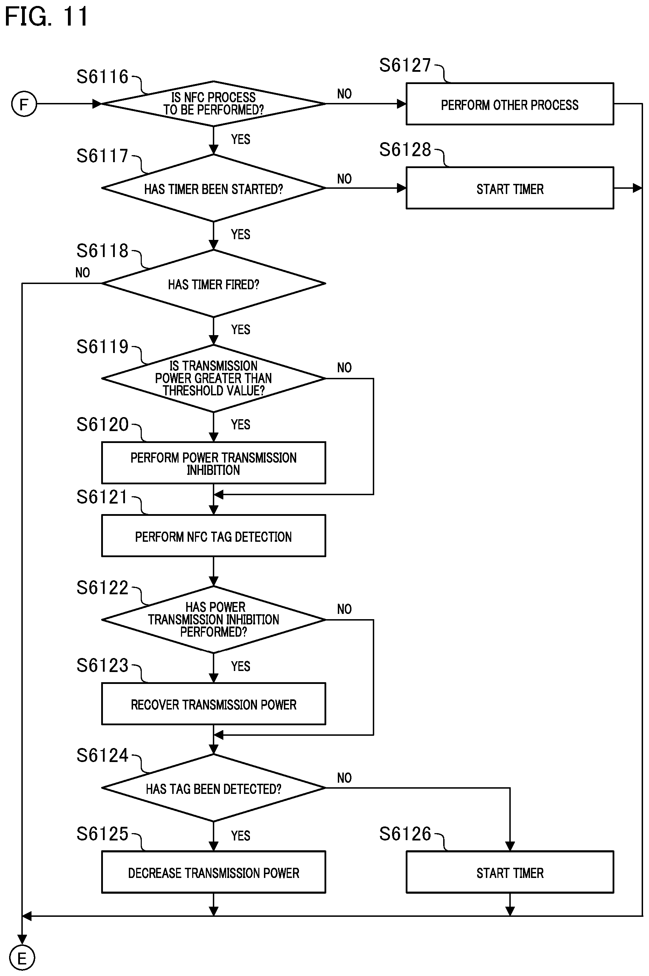

FIGS. 9 to 11 are flowcharts illustrating an example of a process flow that is performed by a TX. FIG. 9 is a flowchart illustrating a process flow in the Negotiation phase, and FIGS. 10 and 11 are flowcharts illustrating a process flow in the Power Transfer phase.

This process flow can be realized, for example, by causing the control unit 301 of the TX to execute a program read from the memory 309. At least a part of the following sequence may be realized by hardware. The hardware in this case can be realized, for example, by automatically generating a dedicated circuit using a gate array circuit such as an FPGA from a program for realizing process steps using a predetermined compiler. This process flow can be performed by turning on a power supply of the TX. This process flow may be started with another trigger.

In S6001, the TX waits for reception of a request. The reception of a request in the TX can be realized by causing the control unit 301 to poll the communication unit 306. The TX waits in S6001 until a request is transmitted. When a request is received, the TX performs processes corresponding to the request subsequently to S6002.

The TX ascertains whether the request received in S6001 is a GRQ(ACAP). This corresponds to transmission of GRQ(ACAP) from the RX in S5002. When the request is the GRQ(ACAP), the TX transmits an ACAP in S6003. This is information that is received by the RX in S5004 and is B0 "threshold value for power transmission inhibition (for example, 80 W)"/B1 "inquiry time"/B2 "electric power in power transmission inhibition"/B3 "power transmission inhibition time" illustrated in FIG. 20(A) as described above. Transmission from the TX in S6003 is realized by causing the control unit 301 to write a message to the communication unit 306. The process flow returns to S6001 after the ACAP has been transmitted.

When the request is not a GRQ(ACAP) in S6002, the TX ascertains whether the request received in S6001 is an SRQ/EN in S6004. When the request is an SRQ/EN, the TX transmits an ACK in S6005, ends the Negotiation phase, and causes the process flow to proceed from S6101 to the Power Transfer phase. When the request is not an SRC/EN, the TX performs a process corresponding to the received command in S6006 and causes the process flow to return to S6001. S6006 corresponds to the process of S5001 in the RX and corresponds to the processes from F407 to F414 in the sequence diagram.

Referring to FIG. 10, the RX ascertains whether a request from the RX has been received in S6101. When the request is a CE, the TX causes the process flow to proceed to S6103 and controls transmission power in accordance with the request based on the CE from the RX. Control of the transmission power is realized by causing the control unit 301 to control the power transmission unit 303.

In S6104, the TX waits for an RPP. When reception of an RPP is ascertained, the TX ascertains details of the RPP to ascertain reception power on the RX side in S6105. In S6106, the TX determines whether power transmission inhibition ON/OFF switching in NFC tag detection ("OFF→ON" or "ON→OFF") is necessary. The TX performs the determination of S6106 by ascertaining its own transmission power. By causing the control unit 301 to ascertain the power transmission unit 303, it is possible to ascertain transmission power from the TX at that time point.

The control unit 301 determines "OFF→ON" when a value of the transmission power is greater than the threshold value (for example, 80 W) and determines "ON→OFF" when the value of the transmission power is equal to or less than the threshold value. The TX transmits an ATN in S6107 and then waits for a DSR/poll from the RX in S6108. When reception of a DSR/poll is ascertained, the TX transmits power transmission inhibition ON/OFF switching information to the RX in S6109 and causes the process flow to return to S6101. The switching information transmitted in S6109 can be ascertained by the RX in S5113 or S5134.

When it is determined in S6106 that power transmission inhibition switching is not necessary, the TX ascertains whether the transmission power is equal to or less than the threshold value (for example, 80 W) in S6110. When the transmission power is equal to or less than the threshold value, it means that the power transmission inhibition is OFF and means a normal Power Transfer phase, and thus the TX transmits an ACK in S6111 and causes the process flow to return to S6101.

On the other hand, when it is determined in S6110 that the transmission power is greater than the threshold value, the TX transmits an ATN in S6112 in order to transmit the switching information to the RX and waits for a DSR/poll from the RX in S6113. When reception of a DSR/poll is ascertained, the TX transmits a time until NFC tag detection in S6114 and causes the process flow to return to S6101. The time information until NFC tag detection transmitted in S6114 is information that is ascertained by the RX in S5128 and is information on the execution wait time. This means a remaining time of the set time (the execution wait time, for example, 50 ms) of the NFC timer that is caused to start in S6126 or S6128 which will be described later. The remaining time of the set time of the NFC timer is an example of an execution remaining time. Ascertainment of the remaining time of the NFC timer is realized by causing the control unit 301 to ascertain the remaining time of the corresponding timer of the timer 310.

When the request is not a CE in S6102, the TX performs other command processing in S6115 and causes the process flow to return to S6101.

When a request from the RX is not received in S6101, the TX determines whether an NFC process (an NFC tag detecting process) is to be performed in S6116 with reference to FIG. 11. The TX ascertains whether the NFC timer has started in S6117 when the NFC process is to be performed, performs other processes in S6127 when the NFC process is not to be performed, and causes the process flow to return to S6101. The timer in S6117 is the NFC timer (for example, 50 ms) for periodic NFC tag detection and is realized by causing the control unit 301 to ascertain the timer 310 as described above.

When the NFC timer has started in S6117, the TX ascertains whether the NFC timer has fired in S6118, starts the NFC timer in S6128 when the NFC timer has not started, and causes the process flow to return to S6101. Starting of the NFC timer is realized by causing the control unit 301 to set a time in the timer 310. Ascertainment of firing of the NFC timer is realized by causing the control unit 301 to ascertain the corresponding timer of the timer 310. When the NFC timer has not fired in S6118, the TX causes the process flow to return to S6101. When the NFC timer has fired, the TX performs power transmission inhibition and NFC tag detection thereafter.

First, in S6119, the TX ascertains whether the transmission power is greater than the threshold value. The TX performs power transmission inhibition in S6120 and then performs NFC tag detection in S6121 when the transmission power is greater than the threshold value, and causes the process flow to proceed directly to S6121 when the transmission power is equal to or less than the threshold value. Electric power in the process of S6120 is "electric power in power transmission inhibition" in FIG. 20(A). The NFC tag detecting process of S6121 is realized by causing the control unit 301 to control the NFC communication unit 311.

The TX ascertains whether power transmission inhibition is being performed in S6122, recovers the transmission power in S6123 when the power transmission inhibition is being performed, and then causes the process flow to return to S6124. When power transmission inhibition is not being performed, the TX causes the process flow to proceed directly to S6124 and determines whether an NFC tag has been detected.

When an NFC tag has been detected, various countermeasures to be taken by the TX are conceivable. In the present embodiment, the TX decreases the transmission power to a level which does not affect the NFC tag in S6125 and then causes the process flow to return to S6101. When an NFC tag has not been detected in S6124, the TX starts the NFC timer for next NFC tag detection in S6126 and then causes the process flow to return to S6101.

By causing the TX to perform power transmission inhibition in S6120, it is possible to curb occurrence of noise affecting communication in NFC tag detection and to perform an appropriate NFC tag detecting process. On the other hand, for example, by causing the TX to control the transmission power to a predetermined value in S6125, it is possible to curb damage of electromagnetic waves on the NFC tag detected in S6124. The predetermined value is a value that is calculated depending on a situation and can have a plurality of values depending on the situation. "Control to a predetermined value" is the same as described above. In this way, the power transmission inhibition of S6120 is performed to appropriately detect an NFC tag, and the transmission power control of S6125 is performed to curb damage on an NFC tag after the NFC tag has been detected. In this way, both are different in purpose and execution timing.

As described above, the TX communicates with the RX and can perform processes in the Power Transfer phase while performing power transmission inhibition ON/OFF switching in NFC tag detection with a change in transmission power.

### <Sequence of TX and RX at the time of power transmission of high output>

FIG. 12 is a sequence diagram illustrating an example in which transmission power is greater than a threshold value (for example, 80 W) and NFC tag detection is performed while curbing power transmission in the normal sequence of the Power Transfer phase illustrated in FIG. 4.

The RX transmits, for example, a CE(+) (F701). The TX having received the CE(+) controls the transmission power in response to a request from the RX (F702). The TX ascertains that the transmission power is greater than the threshold value through the transmission power control (F703, YES in S6106, YES in S5102). The RX transmits an RPP to the TX (F705) while ascertaining that reception power is increased in response to the CE(+) (F704). The RPP includes a reception power value in a state in which the RX has supplied an output of the power reception unit 205 to a load (the charging unit 207).

The TX having ascertained the RPP transmits an ATN to the RX (F706). The RX having received the ATN transmits a DSR/poll to the TX (F707). The TX having received a DSR/poll transmits information of power transmission inhibition ON to the RX (F708, ON in S6109). Accordingly, both the TX and the RX ascertain that power transmission inhibition is performed at the time of NFC tag detection.

Information of power transmission inhibition "OFF→ON" is transmitted to the RX in F708 (S6109), and a process (F709 to F724) including NFC tag detection in the power transmission inhibition ON state is started at a timing (YES in S5112) at which the RX receives the information. In the process including NFC tag detection, the TX starts the NFC timer until the NFC tag detection is performed (F709, S6128) as a step before an NFC tag is actually detected as will be described later. When the information "OFF→ON" is received, the RX starts an inquiry timer of an "inquiry time" (ACAP information in F416) (F710, S5119).

The RX transmits a CE with firing of the inquiry timer (F711, S5120) (F712, S5121). The TX controls the transmission power in response to the CE (F713, S6103). When a change of the reception power in response to the CE is ascertained (F714 and S5121), the RX transmits an RPP to the TX (F715, S5123). The RPP includes a reception power value in a state in which the RX has supplied the output of the power reception unit 205 to the load (the charging unit 207).

Here, it is assumed that the power transmission inhibition ON state is maintained yet, that is, the transmission power is greater than the threshold value (NO in S6106, NO in S6110). The TX having ascertained the RPP transmits an ATN to the RX (F716, S6112). The RX having received the ATN (YES in S5124) transmits a DSR/poll to the TX (F717, S5125). The TX having received the DSR/poll (YES in S6113) sets time information until NFC tag detection (the execution remaining time) and transmits the time information to the RX (F718, S6114). The RX having received the time until NFC tag detection (YES in S5126) starts the timer and sets the time (F719, NO in S5127, S5128).

When the timer until NFC tag detection fires on the RX side (F720, YES in S5130), the RX performs adjustment of the processing load (F721, S5131). On the other hand, when the NFC timer on the TX side fires (F722, YES in S6118), the TX performs power transmission inhibition (F723, S6120). Then, the TX performs the NFC tag detecting process (F724, S6121) and recovers the transmission power (F725, S6123). The RX having ascertained recovery of the transmission power (YES in S5132) releases the adjustment of the processing load (F716, S5133). The processes of F709 to F724 are repeated as long as the transmission power is greater than the threshold value.

Frequency noise is generated in wireless power transfer, and a frequency band of the generated noise becomes wider and the generated noise becomes larger, for example, as the output becomes higher. When an increase in output progresses, for example, there is a likelihood that noise interfering with a communication frequency (for example, 13.56 MHz) at the time of NFC tag detection which may be able to be performed during power transfer will occur. Accordingly, there is concern that the NFC tag detection will not be appropriately performed unless any countermeasure is taken.
However, according to the present embodiment, the TX transmits "threshold value for power transmission inhibition"/"inquiry time"/"electric power in power transmission inhibition"/"power transmission inhibition time" to the RX using the ACAP in the Negotiation phase. Then, when the TX ascertains the transmission power in the Power Transfer phase and the transmission power is greater than the threshold value, the RX copes with the power transmission inhibition performed by the TX in the NFC tag detecting process in the Power Transfer phase. Accordingly, the TX can reliably perform the NFC tag detection in the Power Transfer phase. As a result, even in a situation in which noise affecting communication for the NFC tag detection is generated with an increase in transmission power, it is also possible to appropriately and reliably perform the NFC tag detecting process. That is, in the present embodiment, it is possible to make wireless power transfer of a high output and NFC tag detection which is performed during wireless power transfer be compatible.

In the present embodiment, command processing based on a CEP/RPP is used. However, in communication (communication subsequent to F710) in the NFC tag detecting process in the Power Transfer phase, an RPP may be used instead of the CEP. Accordingly, it is possible to achieve enhancement of processing efficiency. It is also possible to define a message dedicated for NFC tag detection in the Power Transfer phase.

### [Second embodiment]

A process flow when an NFC tag 801 gets in between a TX and an RX in the Power Transfer phase of a high output as illustrated in FIG. 13 similarly to the first embodiment will be mainly described below as a second embodiment. In the present embodiment, a TX and an RX perform communication for information of electric power in power transmission inhibition and inhibition time for each NFC tag detecting process while performing communication in the Power Transfer phase using information transmitted and received in the Negotiation phase. Accordingly, flexible power transmission inhibition is realized. In the present embodiment, description of the same elements or functions as in the first embodiment will be omitted.

### <Process flow in power reception device>

In the Negotiation phase, the RX performs the same processes as those of S5001 to S5006 illustrated in FIG. 5. In the present embodiment, details and formats illustrated in FIG. 20(B) can be assumed as a message acquired from the TX using the ACAP in S5002 to S5004. That is, the RX acquires B0 "threshold value for power transmission inhibition (for example, 80 W)"/B1 "inquiry time."

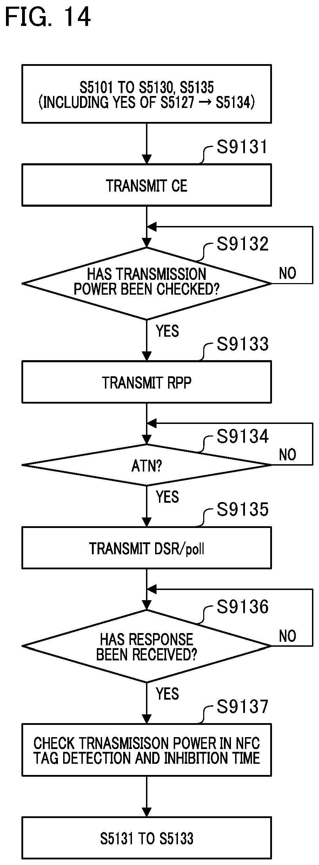

FIG. 14 is a flowchart illustrating a process flow that is performed by the RX in the Power Transfer phase. This process flow can be realized, for example, by causing the control unit 201 of the RX to execute a program read from the memory 211. In the Power Transfer phase, the RX performs the same processes as those of S5101 to S5130, S5134, and S5135 illustrated in FIG. 6.

The process subsequent to YES in S5130 is a process subsequent to S9131. The timing of S5130 is a timing at which a time is measured by a timer until the time to NFC tag detection after the time has been acquired from the TX (from S6114 to S5128 via YES in S5126) in a state in which the transmission power is greater than the threshold value. This is the same as in the first embodiment.

In the present embodiment, the RX processes a CEP/RPP again in S9131. The processes of S9131 to S9136 are the same as the processes of S5121 to S5126. Information received from the TX by the RX in S9136 is information of "electric power in power transmission inhibition"/"power transmission inhibition time" when the NFC tag detecting process is performed in this time. The RX performs a process associated with the processing load similarly to the processes subsequent to S5131 to S5133 on the basis of the received information.

As described above, the RX can cope with power transmission inhibition in the NFC tag detecting process which is switched with a change in transmission power while communicating with the TX.

### <Process flow in power transmission device>

The TX performs the same processes as those of S6001 to S6006 in FIG. 9 in the Negotiation phase. In the present embodiment, data which is transmitted to the RX using the ACAP in S6002 and S6003 is information illustrated in FIG. 20(B) and includes values of "threshold value for power transmission inhibition"/"inquiry time."

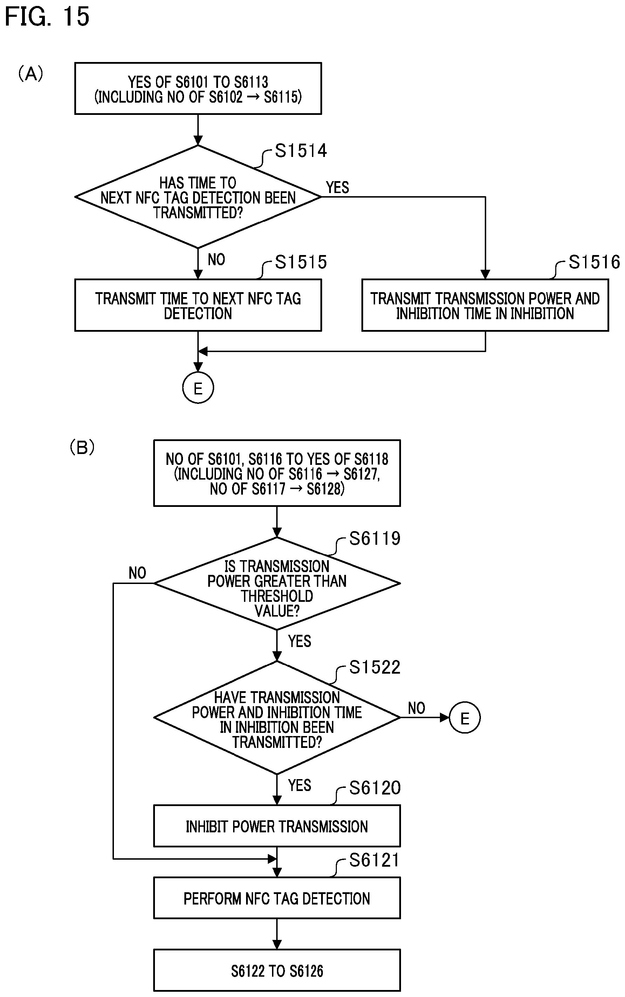

FIGS. 15(A) and 15(B) are flowcharts illustrating a process flow that is performed by the TX in the Power Transfer phase. This process flow can be realized, for example, by causing the control unit 301 of the TX to execute a program read from the memory 309.

As illustrated in FIG. 15(A), the TX performs the same processes as those of YES in S6101 to S6113 and S6115 in FIG. 10 in the Power Transfer phase. The timing of S6113 is a timing at which a DSR/poll is received from the RX after the TX has transmitted an ATN in response to an RPP command received by the RX in a state in which the transmission power is greater than the threshold value.

Subsequently to YES in S6113, the TX ascertains whether the "time until NFC tag detection" has been transmitted to the RX in S1514. In the present embodiment, it is assumed that two times of communication (two times of CEP/RPP processing) are performed at the time of NFC tag detection. Accordingly, the TX ascertains whether transmission of the "time until NFC tag detection" has been completed through a first time of communication in S1514.

When the "time until NFC tag detection" has not been transmitted yet, the TX transmits the "time until NFC tag detection" as the first time of communication in S1515. This is the same as the process of S6114. On the other hand, when the "time until NFC tag detection" has been transmitted, the TX transmits transmission power in power transmission inhibition and inhibition time as the second time of communication in S1516 and causes the process flow to return to S6101. The information transmitted in S1516 is received by the RX in S9137.

As illustrated in FIG. 15(B), the TX performs the same processes as those of NO in S6101, S6116 to S6118, and S6119. The TX ascertains whether the transmission power in inhibition and the inhibition time have been transmitted in S1522. This means that whether the transmission power in inhibition and the inhibition time have been transmitted to the RX in S1516 is ascertained to perform power transmission inhibition in subsequent processes. When this information is transmitted, the TX performs the same processes as those of S6120 to S6126. When the information has not been transmitted, the TX returns to S6101, performs the process of S1516, and then returns to S1522 again. The TX performs the same processes for S6127 and S6128 illustrated in FIG. 11.

As described above, the TX communicates with the RX and can perform the processes of the Power Transfer phase while performing power transmission inhibition ON/OFF switching in NFC tag detection with a change in transmission power.

### <Sequence of TX and RX at the time of power transmission of high output>

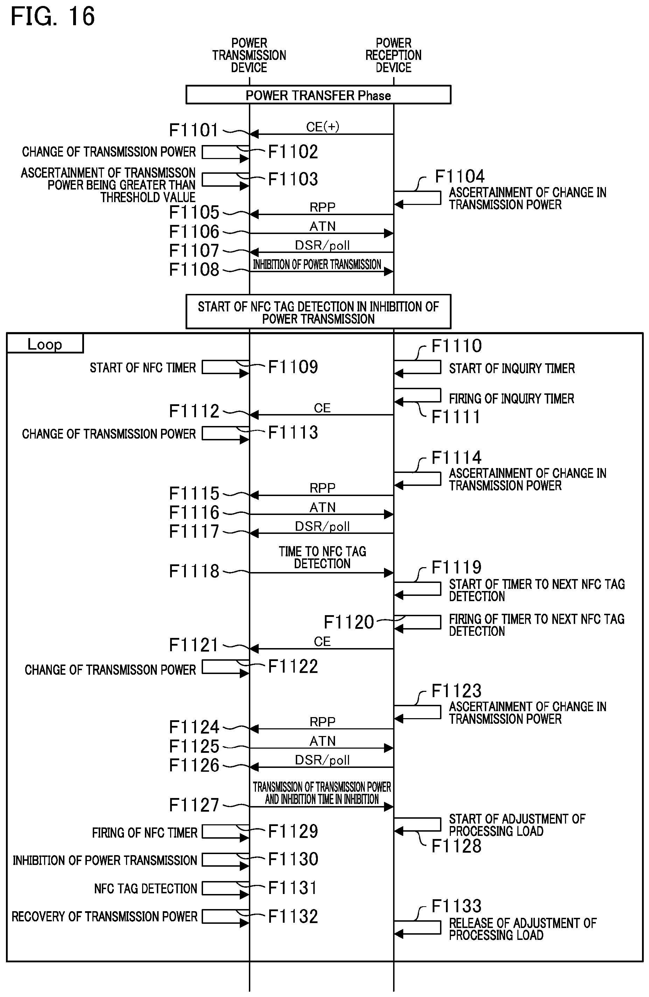

FIG. 16 is a sequence diagram illustrating a process sequence of the TX and the RX. In FIG. 16, similarly to FIG. 12, it is assumed that transmission power is greater than a threshold value (for example, 80 W) and NFC tag detection is performed while inhibiting power transmission in the normal sequence of the Power Transfer phase illustrated in FIG. 4.

The processes of F1101 to F1120 are the same as the processes of F701 to F720. The processes of F1121 to F1126 (from transmission of a CE to transmission of a DSR/poll) are the same as the processes of F1112 to F1117.

The TX having received a DSR/poll transmits information of the transmission power in inhibition and the inhibition time to the RX in F1127. This corresponds to the process of S1516. The processes of F1128 to F1133 are the same as the processes of F721 to F726. The processes of F1109 to F1133 are repeated as long as the transmission power is greater than the threshold value.

As described above, according to the present embodiment, the TX transmits "threshold value for power transmission inhibition"/"inquiry time" to the RX using an ACAP in the Negotiation phase. Then, when the TX ascertains the transmission power in the Power Transfer phase and the transmission power is greater than the threshold value, "threshold value for power transmission inhibition"/"inquiry time" is transmitted for each NFC tag detecting process in the Power Transfer phase. That is, "electric power in power transmission inhibition"/"power transmission inhibition time" is transmitted in the Negotiation phase in the first embodiment, but the information is dynamically transmitted (whenever the NFC tag detecting process is to be performed) even in the Power Transfer phase in the present embodiment. By causing the RX to cope with the power transmission inhibition performed by the TX, it is possible to reliably perform NFC tag detection in the Power Transfer phase. Accordingly, even in a situation in which noise affecting communication in NFC tag detection is generated with an increase in transmission power, it is possible to appropriately and reliably perform the NFC tag detecting process. That is, in the present embodiment, it is possible to make wireless power transfer of a high output and NFC tag detection which is performed during wireless power transfer be compatible.

### [Third embodiment]

A process flow when an NFC tag 801 gets in between a TX and an RX in the Power Transfer phase of a high output as illustrated in FIG. 13 similarly to the first and second embodiments will be mainly described below as a third embodiment. In the present embodiment, when an NFC tag detecting process is performed in a power transmission inhibition ON state, the TX transmits information on power transmission inhibition (information of TX state notification which will be described later) to the RX to perform power transmission inhibition regardless of an inquiry from the RX. Accordingly, more flexible power transmission inhibition is realized. In the present embodiment, description of the same elements or functions as in the first and second embodiments will be omitted.

### <Process flow in power reception device>

In the Negotiation phase, the RX performs the same processes as those of S5001 to S5006 illustrated in FIG. 5. In the present embodiment, details and formats illustrated in FIG. 20(C) can be assumed as a message acquired from the TX using the ACAP in S5002 to S5004. That is, the RX acquires B0 "threshold value for power transmission inhibition (for example, 80 W)."

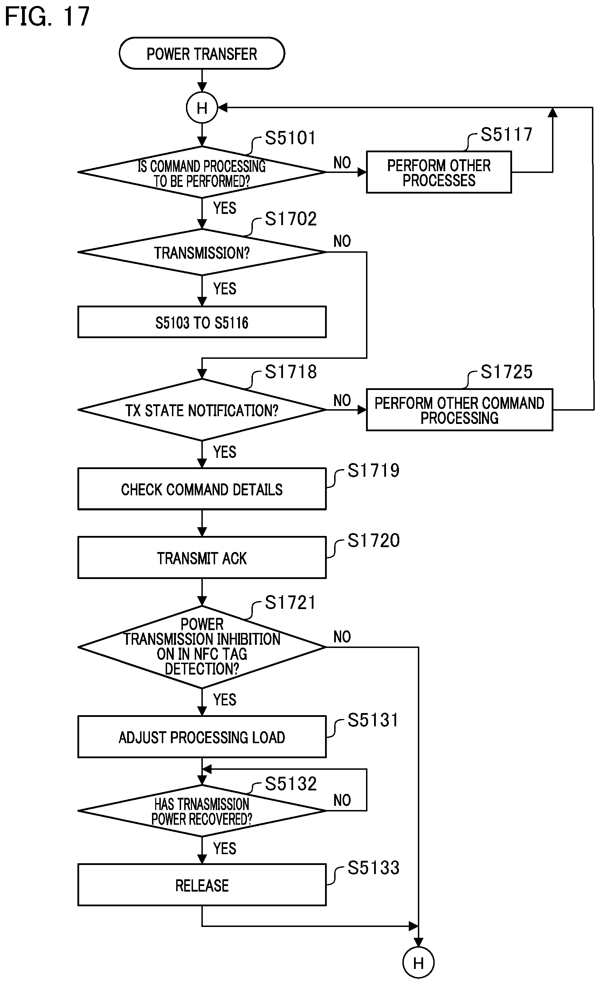

FIG. 17 is a flowchart illustrating a process flow that is performed by the RX in the Power Transfer phase. This process flow can be realized, for example, by causing the control unit 201 of the RX to execute a program read from the memory 211.

As in the process flow illustrated in FIG. 6, the RX determines whether command processing is to be performed in S5101. When command processing is to be performed, the RX determines whether the command processing is transmission processing in S1702, and the process flow proceeds to S5103 (FIG. 6) when the command processing is transmission processing. As illustrated in FIG. 6, the RX performs the processes of S5103 to S5116 and performs the process of S5117 when the result of S5101 is NO.

When the command processing is not transmission processing in S1702, the RX performs a command receiving process in S1718. In the present embodiment, since it is assumed that a command is also issued from the TX, the RX performs a process of receiving the command issued from the TX. The command receiving process in the RX is realized by causing the control unit 201 to poll the WPC communication unit 203. In S1718, the RX ascertains whether the command received from the TX is a TX state notification command. When the received command is not a TX state notification command, the RX performs processing of the corresponding command in S1725 and causes the process flow to return to S1701.

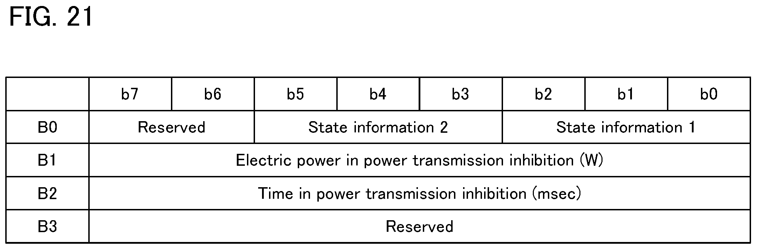

When the command received in S1718 is a TX state notification, the RX ascertains details of the command in S1719. The RX can ascertain a current state of the TX with the TX state notification. FIG. 21 is a diagram illustrating an example of details and formats of the TX state notification command. The TX state notification command includes B1 "electric power in power transmission inhibition"/B2 "power transmission inhibition time" in addition to the TX state information.

In S1720, the RX transmits an ACK to the TX. In S1721, the RX determines whether power transmission inhibition in the NFC tag detecting process is ON. When the power transmission inhibition is ON, the RX adjusts the processing load of the RX using information of "electric power in power transmission inhibition"/"power transmission inhibition time" in the TX state notification command received in S1718 similarly to the first and second embodiments in S5131. Thereafter, the RX performs the processes of S5132 and S5133 in FIG. 6.

### <Process flow in power transmission device>

The TX performs the same processes as those of S6001 to S6006 in FIG. 9 in the Negotiation phase. In the present embodiment, data which is transmitted from the TX using the ACAP in S6002 and S6003 is information illustrated in FIG. 20(C) and includes B0 "threshold value for power transmission inhibition."

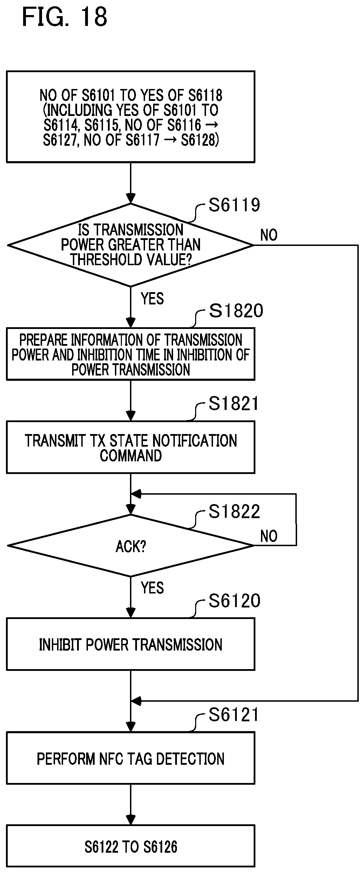

FIG. 18 is a flowchart illustrating an example of a process flow that is performed by the TX in the Power Transfer phase. This process flow can be realized, for example, by causing the control unit 301 of the TX to execute a program read from the memory 309.

The TX performs the same processes as those of YES in S6101 to S6119 in FIG. 10 in the Power Transfer phase and performs the same processes as those of YES in S6101 to S6114 and S6115.

Subsequently to S6118, when the transmission power in S6119 is greater than the threshold value (for example, 80 W), the TX needs to perform the NFC tag detection under the condition in which the transmission power is greater than the threshold value, and thus it is necessary to perform power transmission inhibition. Accordingly, in the present embodiment, it is assumed that a command is transmitted from the TX side to the RX. The TX prepares information of "electric power in power transmission inhibition"/"power transmission inhibition time" in S1820 and transmits the information as the TX state notification command (FIG. 21) to the RX in S1821.

In S1822, the TX waits for an ACK from the RX and then performs the processes of S6120 to S6126 in FIG. 11.

### <Sequence of TX and RX at the time of power transmission of high output>

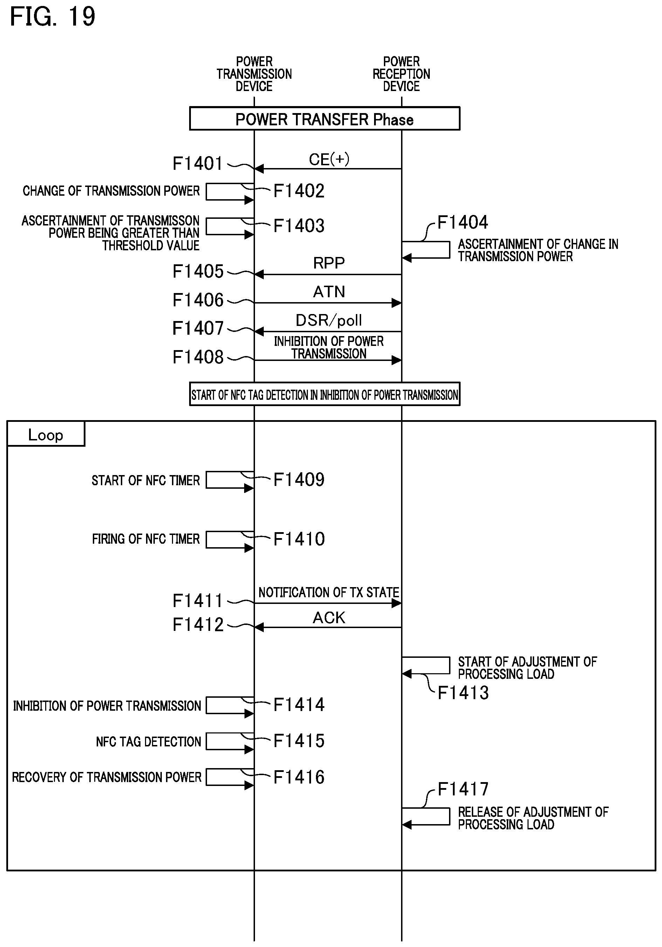

FIG. 19 is a sequence diagram illustrating a process sequence of the TX and the RX. In FIG. 19, similarly to FIG. 12 and FIG. 16, it is assumed that transmission power is greater than a threshold value (for example, 80 W) and NFC tag detection is performed while inhibiting power transmission in the normal sequence of the Power Transfer phase illustrated in FIG. 4.

The processes of F1401 to F1409 are the same as the processes of F701 to F709. Thereafter, the TX ascertains firing of the NFC timer which has started in F1409 (F1410). When the NFC timer fires, the TX transmits the TX state notification command to the RX (F1411), and the RX returns an ACK (F1412).

The RX adjusts the processing load on the basis of the information "electric power in power transmission inhibition"/"power transmission inhibition time" received in F1411 (F1413). The processes of F1414 to F1417 are the same as the processes of F723 to F726. The processes of F1409 to F1417 are repeated as long as the transmission power is greater than the threshold value.

As described above, according to the present embodiment, the TX transmits "threshold value for power transmission inhibition" to the RX using an ACAP in the Negotiation phase. Then, when the TX ascertains the transmission power in the Power Transfer phase and the transmission power is greater than the threshold value, "threshold value for power transmission inhibition"/"inquiry time" is transmitted for each NFC tag detecting process in the Power Transfer phase. In the present embodiment, unlike the first and second embodiments, since the RX does not require control of transmission power (CE) based on its own load, the TX transmits "electric power in power transmission inhibition"/"inquiry time" without waiting for an inquiry from the RX. By causing the RX to cope with the power transmission inhibition performed by the TX, it is possible to reliably perform NFC tag detection in the Power Transfer phase. Accordingly, even in a situation in which noise affecting communication in NFC tag detection is generated with an increase in transmission power, it is possible to appropriately and reliably perform the NFC tag detecting process. That is, in the present embodiment, it is possible to make wireless power transfer of a high output and NFC tag detection which is performed during wireless power transfer be compatible.

### [Other embodiments]

Other embodiments which are not limited to descriptions in parts common to the first to third embodiments will be described below.

A method of ascertaining transmission power on the TX side as a criterion for determining that power transmission inhibition is turned on at the time of NFC tag detection has been described above, but other methods may be used. For example, the determination may be performed using reception power which is transmitted using an RPP by the RX. That is, when the reception power transmitted using an RPP from the RX is greater than a threshold value, the TX can set the power transmission inhibition to an ON state.
Alternatively, the TX may determine the threshold value on the basis of the GP which is determined in the Negotiation phase. In this case, the GP may be used as the threshold value, or both the GP and the threshold value may be used. In the latter, for example, when the GP is set to a value greater than the threshold value, it means that power transmission inhibition is always in the ON state in the NFC tag detecting process in the Power Transfer phase. Mainly, the control unit 301 and a program for determining the threshold value are an example of a determination means.
Alternatively, a power transmission profile (power profile) which is determined in the Negotiation phase may be used as a criterion for determination. For example, when a power profile with which a high output is expected is determined, it means that power transmission inhibition is always in the ON state in the NFC tag detecting process in the Power Transfer phase.
Alternatively, with a power profile with a very low likelihood that an NFC tag will get in in the Power Transfer phase, the power transmission inhibition can also be always set to the OFF state. This is assumed for a case in which the TX and the RX are strongly coupled and a profile with a low likelihood that a foreign object will get in.

In the aforementioned embodiments, an example in which the RX adjusts the processing load in power transmission inhibition in the NFC tag detecting process has been described, but the present disclosure is not limited thereto. For example, when sufficient electric power is supplied to the battery 208 of the RX and inhibition of power transmission does not cause any problem, the RX can also perform a process of not adjusting the processing load. The RX can also perform a process of determining whether a processing load is to be adjusted on the basis of a relationship between power supply in wireless power transfer and power consumption on the RX side. For example, the RX can also determine that the processing load is adjusted in a situation in which a process with a high load is being performed and power consumption on the RX side is greater than electric power supplied from the TX.

In the aforementioned embodiments, an example in which the TX decreases the transmission power as the power transmission inhibition in the NFC tag detecting process has been described, but the present disclosure is not limited thereto. For example, power transmission may be stopped at the time of NFC tag detection. When the power transmission is stopped, the RX side needs to cautiously cope therewith. When or the power transmission is stopped when the RX does not include a battery or the RX includes a battery but a state of charge thereof is low, there is concern that a state up to now will be lost by a power loss and the RX will not communicate with the TX due to state mismatch. Accordingly, when the RX does not include a battery or when the RX includes a battery but a state of charge is low, the RX saves a state at that time in a nonvolatile memory and prepares for stopping of the power transmission at the time of adjustment of the processing load. After the transmission power has been recovered (restarted), the RX can recover the saved information to continuously perform the Power Transfer phase. While stopping the transmission power, the TX stores information on the RX state and continuously performs the Power Transfer phase with the RX after recovering (restarting) the power transmission. The information on the RX state is information which is received from the RX by the TX in the Negotiation phase or the Power Transfer phase up to that time. Mainly, the control unit 201 is an example of a restart means for restarting power reception on the basis of the stored information on the state of the power reception device.
The TX can also ascertain that there is an RX by issuing an Analog Ping during stopping of the power transmission in order to determine whether the RX has moved from an appropriate charging position during stopping of the power transmission.

The TX may variably control the period (the execution wait time) of the NFC tag detecting process, the inquiry time, and/or the time (the execution remaining time) until the NFC tag detection on the basis of the transmission power. For example, when the transmission power is great, it is preferable to finely perform the NFC tag detection. In order to realize this, the TX appropriately can also change the period of the NFC tag detecting process and the inquiry interval (the inquiry time) from the RX to the TX on the basis of the transmission power. For example, the process flow in the TX illustrated in FIG. 10 will be exemplified. The process of "transmitting a time until next NFC tag detection" of S6114 is a process in a situation in which the transmission power is greater than the threshold value (NO in S6110). Here, the TX can change the inquiry time by notifying the RX of the "inquiry time" in the next time in addition to "transmitting the time until next NFC tag detection." The RX acquires information of e "transmitting the time until next NFC tag detection" and the "inquiry time" in the next time in the process of S5128. Then, the RX can change an inquiry period by setting the timer start in S5119 in the next time to the acquired inquiry time. The TX may start the timer in the changed NFC detection period in starting of the NFC timer in S6128 or S6126. In the third embodiment, the TX can take countermeasures by only changing the period of the NFC timer on the TX side.

Alternatively, the TX may variably control the period (the execution wait time) of the NFC tag detecting process, the inquiry time, and/or the time (the execution remaining time) until the NFC tag detection on the basis of the GP determined in the Negotiation phase. For example, the TX can determine the period of the NFC tag detecting process according to the GP value and adjust the inquiry interval which is transmitted using an ACAP according to the value.

In the aforementioned embodiments, the information of the "threshold value for power transmission inhibition" is transmitted to the RX in the Negotiation phase, but may be transmitted to the RX in the Power Transfer phase. The same is true of the "inquiry time" in the first and second embodiments. In this case, at least one of the "threshold value for power transmission inhibition" and the "inquiry time" has only to be transmitted to the RX in the Power Transfer phase. Alternatively, one of the "electric power in power transmission inhibition" and the "power transmission inhibition time" may be transmitted in the Negotiation phase, and the other may be transmitted in the Power Transfer phase.

In the aforementioned embodiments, the TX transmits the GRQ(ACAP) after transmitting the SRQ(ACAP) in F413 illustrated in FIG. 4 (F415). However, the timing of transmission of the GRQ(ACAP) is not particularly limited as long as it is a timing after an ACK has been transmitted in F408 in the Negotiation phase. An example of the timing is a timing between F412 and F413.

A part (all in some cases) of the constituents in the aforementioned embodiments may be replaced with other constituents capable of achieving the same functions or omitted, and other constituents may be added thereto. The embodiments are not limited to the WPC standard, but can be applied to various standards.

The power transmission device and the power reception device may be, for example, an image input device such as an imaging device (a still camera, a video camera, or the like) or a scanner or may be an image output device such as a printer, a copier, or a projector. The power transmission device and the power reception device may be a storage device such as a hard disk device or a memory device or an information processing device such as a personal computer (PC), a smartphone, or a tablet device.

The power reception device according to the present disclosure may be an information terminal device. For example, the information terminal device includes a display unit (a display) that displays information to a user and that is supplied with electric power received from the power reception antenna. The electric power received from the power reception antenna is stored in a power storage unit (a battery), and electric power is supplied to the display unit from the battery. In this case, the power reception device may include a communication unit that communicates with a device other than the power transmission device. The communication unit may cope with a communication standard such as the NFC communication or the 5-th generation mobile communication system (5G).

The power reception device according to the present disclosure may be a vehicle such as an automobile. For example, an automobile which is a power reception device may receive electric power from a charger (a power transmission device) via a power transmission antenna which is installed in a parking lot. The automobile which is a power reception device may receive electric power from a charger (a power transmission device) via a power transmission antenna which is embedded in a road. This automobile supplies the received electric power to a battery. Electric power of the battery may be supplied to an engine (a motor or an electric motor) for driving wheels or may be used to drive a sensor used to assist with driving or to drive a communication unit communicating with an external device. That is, in this case, the power reception device may include a battery, a motor or a sensor driven using received electric power, or a communication unit communicating with a device other than the power transmission device in addition the wheels. The power reception device may include an accommodation part in which a person is accommodated. For example, the sensor includes a sensor used to measure an inter-vehicle distance or a distance to another obstacle. The communication unit may cope with, for example, a global positioning system or global positioning satellites (GPS). The communication unit may cope with a communication standard such as the 5-th generation mobile communication system (5G). A bicycle or a motorbike may be used as the vehicle.

The power reception device according to the present disclosure may be an electric tool, a household electric appliance, or the like. This device which is a power reception device may include a motor which is driven with reception power stored in a battery in addition to the battery. This device may include a notification means for notifying of a state of charge or the like of the battery. This device may include a communication unit that communicates with another device other than a power transmission device. The communication unit may cope with a communication standard such as NFC or the 5-th mobile communication system (5G).

The power transmission device according to the present disclosure may be an onboard charger that transmits electric power to a mobile information terminal device such as a smartphone or a tablet corresponding to wireless power transfer in a vehicle such as an automobile. This onboard charger may be provided at any position in the automobile. For example, the onboard charger may be installed in the console of the automobile or may be installed in an instrument panel (a dashboard), a position between passenger's seats, the ceiling, or a door. Here, it is preferable that the onboard charger not be installed in a place causing interference with driving. An onboard charger is described as an example of the power transmission device, but such a charger is not limited to installation in a vehicle, but may be installed in a transport machine such as a subway train, an aircraft, or a ship. In this case, the charger may be installed at a position between passenger's seats, the ceiling, or a door.

A vehicle such as an automobile including an onboard charger may be used as a power transmission device. In this case, the power transmission device include wheels and a battery and supplies electric power of the battery to a power reception device via a power transmission circuit unit or a power transmission antenna.

The present disclosure can also be realized by a process in which a program for realizing one or more functions of the aforementioned embodiments is provided to a system or a device via a network or a storage medium and one or more processors in a computer of the system or the device reads and executes the program. The present disclosure can also be realized by a circuit (for example, an ASIC) for realizing one or more functions.

While the present disclosure has been described above in detail in conjunction with exemplary embodiments thereof, the present disclosure is not limited to the embodiments and can be modified in various forms on the basis of the gist of the present disclosure, which are not excluded from the scope of the present disclosure.

### (Cross-reference to related application)

Priority is claimed on Japanese Patent Application No. 2024-5434, filed January 17, 2024. The content of this Japanese Patent Application is incorporated herein by reference.

## Claims

1. A power transmission device comprising:
a negotiation means configured to perform negotiation with a power reception device;
a power transmission means configured to wirelessly transmit power to the power reception device based on a result of the negotiation;
a processing means configured to perform a process including detection of a near-field communication (NFC) tag; and
a communication means configured to transmit information on the NFC tag detection to the power reception device in at least the negotiation, wherein the NFC tag detection is performed during power transmission .

2. The power transmission device according to claim 1, wherein the processing means adjusts transmission power from the power transmission means based on the information on the NFC tag detection and performs the NFC tag detection in a state in which the transmission power has been adjusted.

3. The power transmission device according to claim 2, wherein the information on the NFC tag detection includes information indicating a threshold value of the transmission power for allowing the processing means to start a process associated with the adjustment of the transmission power.

4. The power transmission device according to claim 3, wherein the information on the NFC tag detection further includes adjustment power information indicating the transmission power at the time of adjustment and duration time information indicating a time over which power transmission using the transmission power at the time of adjustment is continuously performed, and
wherein the processing means adjusts the transmission power based on the adjustment power information and the duration time information.

5. The power transmission device according to claim 4, wherein the communication means transmits the adjustment power information and the duration time information to the power reception device after the transmission power has exceeded the threshold value.

6. The power transmission device according to claim 3, wherein the information on the NFC tag detection further includes information indicating an inquiry wait time until the power reception device transmits an inquiry to the power transmission device, and
wherein a target of the inquiry is information on an execution wait time until the processing means executes the NFC tag detection after the transmission power has exceeded the threshold value.

7. The power transmission device according to claim 6, wherein the information on the NFC tag detection further includes adjustment power information indicating the transmission power at the time of adjustment and duration time information indicating a time over which power transmission using the transmission power at the time of adjustment is continuously performed, and
wherein the processing means adjusts the transmission power based on the adjustment power information and the duration time information.

8. The power transmission device according to claim 7, wherein the execution wait time includes an execution remaining time until the NFC tag detection is performed, which is set based on reception of the inquiry by the communication means.

9. The power transmission device according to claim 8, wherein the communication means transmits information indicating the execution remaining time to the power reception device in response to the inquiry before the execution wait time elapses, and
wherein the processing means adjusts the transmission power after the execution wait time has elapsed.

10. The power transmission device according to claim 9, wherein the communication means transmits information indicating the execution remaining time to the power reception device in response to the inquiry before the execution wait time elapses and further transmits the adjustment power information and the duration time information to the power reception device based on reception of the inquiry further performed based on the execution remaining time by the power reception device.

11. The power transmission device according to claim 5, wherein the processing means sets an execution wait time until the processing means performs the NFC tag detection after the transmission power has exceeded the threshold value, and
wherein the communication means transmits the adjustment power information and the duration time information to the power reception device after the execution wait time has elapsed.

12. The power transmission device according to claim 8, wherein the processing means controls at least one of the execution wait time, the inquiry wait time, and the execution remaining time based on the transmission power.

13. The power transmission device according to claim 8, wherein the processing means controls at least one of the execution wait time, the inquiry wait time, and the execution remaining time based on guaranteed power determined through the negotiation.

14. The power transmission device according to claim 2, wherein the processing means decreases the transmission power or stops the power transmission as the adjustment of the transmission power.

15. The power transmission device according to claim 14, wherein, in a case where the power transmission is stopped, the processing means stores information on a state of the power reception device, performs the NFC tag detection, and then restarts the power transmission based on the stored information on the state of the power reception device.

16. The power transmission device according to claim 2, wherein the information on the NFC tag detection includes information indicating a threshold value of reception power received by the power reception device for the processing means to start the process associated with the adjustment of the transmission power.

17. The power transmission device according to claim 3, further comprising a determination means configured to determine the threshold value based on information of guaranteed power determined through the negotiation or a power transmission profile.

18. A power reception device comprising:
a negotiation means configured to perform negotiation with a power transmission device capable of performing a process including detection of a near-field communication (NFC) tag;
a power reception means configured to wirelessly receive power from the power transmission device based on a result of the negotiation; and
a communication means configured to receive information on the NFC tag detection from the power transmission device in at least the negotiation, wherein the NFC tag detection is performed during power transmission .

19. The power reception device according to claim 18, wherein the information on the NFC tag detection includes information indicating a threshold value of transmission power for allowing the power transmission device to start a process associated with adjustment of the transmission power and information indicating an inquiry wait time until the communication means transmits an inquiry to the power transmission device,
wherein the power transmission device adjusts the transmission power based on the information on the NFC tag detection and performs the NFC tag detection in a state in which the transmission power has been adjusted, and
wherein the communication means receives an execution remaining time until the NFC tag detection is performed, which is set and transmitted based on reception of the inquiry by the power transmission device after the inquiry wait time has elapsed.

20. The power reception device according to claim 19, wherein the power transmission device adjusts the transmission power based on adjustment power information indicating the transmission power at the time of adjustment and duration time information indicating a time over which power transmission using the transmission power at the time of adjustment is continuously performed, which are further included in the information on the NFC tag detection, and
wherein the power reception device further comprises an adjustment means configured to adjust a processing load of the power reception device based on the adjustment power information and the duration time information after the execution remaining time has elapsed.

21. The power reception device according to claim 20, wherein the power transmission device further transmits the adjustment power information and the duration time information to the power reception device based on further reception of the inquiry transmitted after the execution remaining time has elapsed by the power reception device, and
wherein the adjustment means adjusts the processing load based on the adjustment power information and the duration time information transmitted from the power transmission device.

22. The power reception device according to claim 18, wherein the information on the NFC tag detection includes information indicating a threshold value of transmission power for allowing the power transmission device to start a process associated with adjustment of the transmission power, adjustment power information indicating the transmission power at the time of adjustment, and duration time information indicating a time over which power transmission using the transmission power at the time of adjustment is continuously performed, and
wherein the power transmission device sets an execution wait time until the power transmission device performs the NFC tag detection after the transmission power has exceeded the threshold value, transmits the adjustment power information and the duration time information to the power reception device after the execution wait time has elapsed, adjusts the transmission power based on the adjustment power information and the duration time information, and performs the NFC tag detection in a state in which the transmission power has been adjusted, and
wherein the power reception device further comprises an adjustment means configured to adjust a processing load of the power reception device based on the adjustment power information and the duration time transmitted from the power transmission device.

23. The power reception device according to claim 18, wherein the power transmission device decreases the transmission power or stops the power transmission as the adjustment of the transmission power, and
wherein the power reception device further comprises a restart means configured to store information on a state of the power reception device in a case where the power transmission is stopped and restarts power reception based on the stored information on the state of the power reception device in a case where the power transmission has been restarted after the NFC tag detection has been performed.

24. A method that is performed by a power transmission device, the method comprising:
a step of performing negotiation with a power reception device;
a step of wirelessly transmitting power to the power reception device based on a result of the negotiation;
a step of performing a process including detection of a near-field communication (NFC) tag; and
a step of transmitting information on the NFC tag detection to the power reception device in at least the negotiation, wherein the NFC tag detection is performed during power transmission .

25. A method that is performed by a power reception device, the method comprising:
a step of performing negotiation with a power transmission device capable of performing a process including detection of a near-field communication (NFC) tag;
a step of wirelessly receiving power from the power transmission device based on a result of the negotiation; and
a step of receiving information on the NFC tag detection from the power transmission device in at least the negotiation, wherein the NFC tag detection is performed during power transmission .

26. A program causing a computer to perform the method according to claim 24 or 25.
